(19) Europäisches Patentamt
European Patent Office
Office européen des brevets

(11) EP 4 668 942 A1

# (12) EUROPEAN PATENT APPLICATION

published in accordance with Art. 153(4) EPC

(43) Date of publication:
**24.12.2025 Bulletin 2025/52**

(21) Application number: **23921889.4**

(22) Date of filing: **16.02.2023**

(51) International Patent Classification (IPC):
***H04W 72/0446*** *(2023.01)*

(52) Cooperative Patent Classification (CPC):
**H04W 72/04; H04W 72/0446; H04W 72/0453; H04W 72/23**

(86) International application number:
**PCT/CN2023/076585**

(87) International publication number:
**WO 2024/168735 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventors:
- **XU, Jing**
  **Dongguan, Guangdong 523860 (CN)**
- **ZHANG, Yi**
  **Dongguan, Guangdong 523860 (CN)**

(74) Representative: **Penza, Giancarlo**
**Bugnion S.p.A.**
**Viale Lancetti, 17**
**20158 Milano (IT)**

## (54) WIRELESS TRANSMISSION METHOD AND APPARATUS, DEVICE, AND STORAGE MEDIUM

(57) A wireless transmission method and apparatus, a device, and a storage medium, relating to the technical field of mobile communications. The method is executed by a terminal device, and comprises: receiving resource configuration information, the resource configuration information being used for indicating the resource location of an uplink frequency domain resource and/or a non-uplink frequency domain resource on at least one time domain resource unit, wherein an uplink frequency domain resource and a non-upink frequency domain resource having the same time domain are allowed to be configured on the time domain resource unit.

Receive resource configuration information. The resource configuration information is used for indicating resource location(s) of an UL frequency domain resource and/or a non-UL frequency domain resource on at least one time domain resource unit. The UL frequency domain resource and the non-UL frequency domain resource that have same time domain are allowed to be configured on the time domain resource unit
301
Determine time-frequency resource(s) for UL transmission and/or non-UL transmission according to the resource configuration information
302

FIG. 3

EP 4 668 942 A1

## Description

TECHNICAL FIELD

The present disclosure relates to the technical field of mobile communication, and in particular, to a wireless transmission method and apparatus, a device and storage medium.

BACKGROUND

In a mobile communication system, X Division Duplex (XDD) technology is a technology in which data is allowed to be sent and received simultaneously on different subbands in a subframe.

In the XDD technology, how to realize the resource configuration from the network side to the terminal side is a problem that needs to be solved at present.

SUMMARY

Embodiments of the present disclosure provide a wireless transmission method and apparatus, a device and a storage medium. The technical solutions are as follows.

In an aspect, the embodiments of the present disclosure provide a wireless transmission method. The method is performed by a terminal device, and the method includes the following operation.

Resource configuration information is received. The resource configuration information is used for indicating resource location(s) of an uplink (UL) frequency domain resource and/or a non-UL frequency domain resource on at least one time domain resource unit.

The UL frequency domain resource and non-UL frequency domain resource that have same time domain are allowed to be configured on the time domain resource unit.

In an aspect, the embodiments of the present disclosure provide a wireless transmission method. The method is performed by a network device, and the method includes the following operation.

Resource configuration information is sent to a terminal device. The resource configuration information is used for indicating resource location(s) of an UL frequency domain resource and/or a non-UL frequency domain resource on at least one time domain resource unit.

The UL frequency domain resource and non-UL frequency domain resource that have same time domain are allowed to be configured on the time domain resource unit.

In another aspect, the embodiments of the present disclosure provide a wireless transmission apparatus. The apparatus includes a receiving module.

The receiving module is configured to receive resource configuration information. The resource configuration information is used for indicating resource location(s) of an UL frequency domain resource and/or a non-UL frequency domain resource on at least one time domain resource unit.

The UL frequency domain resource and non-UL frequency domain resource that have same time domain are allowed to be configured on the time domain resource unit.

In another aspect, the embodiments of the present disclosure provide a wireless transmission apparatus. The apparatus includes a sending module.

The sending module is configured to send resource configuration information to a terminal device. The resource configuration information is used for indicating resource location(s) of an UL frequency domain resource and/or a non-UL frequency domain resource on at least one time domain resource unit.

The UL frequency domain resource and non-UL frequency domain resource that have same time domain are allowed to be configured on the time domain resource unit.

In another aspect, the embodiments of the present disclosure provide a terminal device. The terminal device includes a processor, a memory and a transceiver.

The memory is configured to store a computer program, and the processor is configured to execute the computer program to cause the terminal device to implement the above wireless transmission method.

In another aspect, the embodiments of the present disclosure provide a network device. The network device includes a processor, a memory and a transceiver.

The memory is configured to store a computer program, and the processor is configured to execute the computer program to cause the network device to implement the above wireless transmission method.

In yet another aspect, the embodiments of the present disclosure further provide a computer-readable storage medium. A computer program is stored in the storage medium, and the computer program is loaded and executed by a processor to implement the above wireless transmission method.

In yet another aspect, the present disclosure further provides a chip. The chip is used for operation in a communication device to cause the communication device to perform the above wireless transmission method.

In yet another aspect, the present disclosure provides a computer program product. The computer program product includes computer instructions stored in a computer-readable storage medium. A processor of the communication device reads the computer instructions from the computer-readable storage medium, and the processor executes the computer instructions to cause the communication device to perform the above wireless transmission method.

In yet another aspect, the present disclosure provides a computer program. The computer program is executed by a processor of a communication device to implement the above wireless transmission method.

The embodiments of the present disclosure provide a solution for the resource configuration. In a scenario in which an UL frequency domain resource and a non-UL frequency domain resource that have the same time domain are allowed to be configured on the same time domain resource unit, the terminal device receives resource configuration information for indicating resource location(s) of an UL frequency domain resource and/or a non-UL frequency domain resource on at least one time domain resource unit, thereby enabling the terminal to determine a time-frequency two-dimensional configuration in an XDD transmission scenario, avoiding a conflict between UL transmission and non-UL transmission in the XDD transmission scenario, and improving transmission efficiency of a wireless communication system.

BRIEF DESCRIPTION OF THE DRAWINGS

In order to more clearly explain the technical solutions in the embodiments of the present disclosure, the accompanying drawings that need to be used in the description of the embodiments will be briefly introduced below. It is apparent that the accompanying drawings in the following description are only some embodiments of the present disclosure, and for those skilled in the art, other accompanying drawings may be obtained from these accompanying drawings without making creative efforts.

FIG. 1 is a schematic diagram of an architecture of a communication system according to an embodiment of the present disclosure.

FIG. 2 is a schematic diagram of frequency domain resources according to the present disclosure.

FIG. 3 is a flowchart of a wireless transmission method according to an embodiment of the present disclosure.

FIG. 4 is a schematic diagram of an UL transmission configuration according to the embodiment illustrated in FIG. 3.

FIG. 5 is a flowchart of a wireless transmission method according to an embodiment of the present disclosure.

FIG. 6 is a schematic diagram of resource configuration and scheduling according to an exemplary embodiment of the present disclosure.

FIG. 7 is a flowchart of a wireless transmission method according to an embodiment of the present disclosure.

FIG. 8 is a schematic diagram of resource configuration according to the embodiment illustrated in FIG. 7.

FIG. 9 is a schematic diagram of resource configuration according to the embodiment illustrated in FIG. 7.

FIG. 10 is a schematic diagram of resource configuration according to the embodiment illustrated in FIG. 7.

FIG. 11 is a block diagram of a wireless transmission apparatus according to an embodiment of the present disclosure.

FIG. 12 is a block diagram of a wireless transmission apparatus according to an embodiment of the present disclosure.

FIG. 13 is a schematic structural diagram of a communication device according to an embodiment of the present disclosure.

DETAILED DESCRIPTION

In order to clarify the object, technical solutions, and advantages of the present disclosure, embodiments of the present disclosure will be described in further detail below with reference to the accompanying drawings.

The network architecture and the service scenarios described in the embodiments of the present disclosure are used for describing the technical solutions of the embodiments of the present disclosure more clearly, and do not constitute a limitation on the technical solutions provided by the embodiments of the present disclosure. Those skilled in the art will know that with the evolution of the network architecture and the emergence of new service scenarios, the technical solutions provided by the embodiments of the present disclosure can also be applicable to similar technical problems.

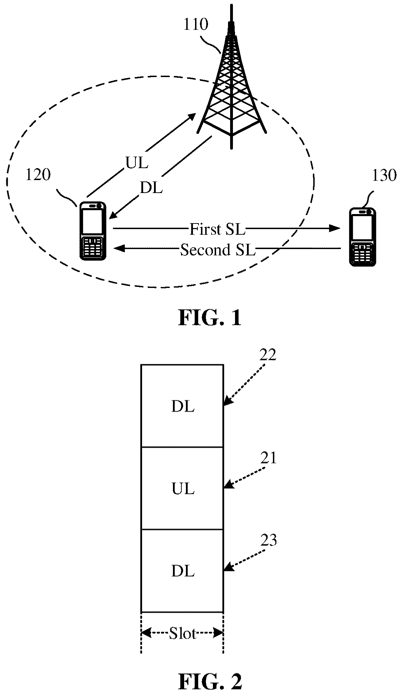

FIG. 1 is a schematic diagram of a communication system according to an exemplary embodiment of the present disclosure. The communication system includes the network device 110 and the terminal device 120, and/or the terminal device 120 and the terminal device 130, which is not limited in the present disclosure.

The network device 110 in the present disclosure provides wireless communication functions. The network device 110 includes, but is not limited to: an Evolved Node B (eNB), a Radio Network Controller (RNC), a Node B (NB), a Base Station Controller (BSC), a Base Transceiver Station (BTS), a home base station (for example, a Home Evolved Node B, or Home Node B (HNB)), a Baseband Unit (BBU), an Access Point (AP) in a Wireless Fidelity (Wi-Fi) system, a wireless relay node, a wireless backhaul node, a Transmission Point (TP), a Transmission and Reception Point (TRP), a Next Generation Node B (gNB) or TRP or TP in the 5th Generation (5G) mobile communication system, one antenna panel or a group of antenna panels (including multiple antenna panels) of a base station in the 5G system, or a network node that constitutes a gNB or a TP, such as a BBU or Distributed Unit (DU), a base station in Beyond Fifth Generation (B5G), 6th Generation (6G) mobile communication system, a Core Network (CN), Fronthaul, Backhaul, Radio Access Network (RAN), network slicing, or a service cell, a Primary Cell (PCell), a Primary secondary cell (PSCell), a special cell (SpCell), a Secondary cell (SCell), or a neighboring cell of a terminal devices, or the like.

The terminal device 120 and/or the terminal device 130 in the present disclosure may be referred to as a User Equipment (UE), an access terminal, a subscriber unit, a subscriber station, a mobile station, a mobile stage, a remote station, a remote terminal, a mobile device, a user terminal, a terminal, a wireless communication device, a user agent, and a user device. The terminal includes, but is not limited to: a handheld device, a wearable device, a vehicle-mounted device, and an Internet of Things device, such as a mobile phone, a tablet, an electronic book reader, a laptop portable computer, a desktop computer, a television, a game console, a Mobile Internet Device (MID), an Augmented Reality (AR) terminal, a Virtual Reality (VR) terminal and Mixed Reality (MR) terminal, a wearable device, a handle, an electronic tag, a controller, a wireless terminal in Industrial Control, a wireless terminal in Self Driving, a wireless terminal in Remote Medical, a wireless terminal in Smart Grid, a wireless terminal in Transportation Safety, a wireless terminal in Smart City, a wireless terminal in Smart Home, a wireless terminal in Remote Medical Surgery, a cellular telephone, a cordless telephone, a Session Initiation Protocol (SIP) telephone, a Wireless Local Loop (WLL) station, a Personal Digital Assistant (PDA), a Set Top Box (STB), a Customer Premise Equipment (CPE), or the like.

The network device 110 and the terminal device 120 communicate with each other through some air interface technology, such as a Uu interface.

Exemplarily, there are two communication scenarios between the network device 110 and the terminal device 120: an UL communication scenario and a downlink (DL) communication scenario. Here, the UL communication is sending a signal to the network device 110, and the DL communication is sending a signal to the terminal device 120.

The terminal device 120 and the terminal device 130 communicate with each other through some air interface technology, such as a PC5 interface.

In some embodiments, there are two communication scenarios between the terminal device 120 and the terminal device 130: the first sidelink (SL) communication scenario and the second SL communication scenario. The first SL communication is sending a signal to the terminal device 130, and the second SL communication is sending a signal to the terminal device 120.

The terminal device 120 and the terminal device 130 are both within the network coverage range and located in the same cell, or the terminal device 120 and the terminal device 130 are both within the network coverage range but located in different cells, or the terminal device 120 is within the network coverage range but the terminal device 130 is outside the network coverage range.

The technical solutions provided by the embodiments of the present disclosure may be applied to various communication systems, such as a Global System of Mobile communication (GSM) system, a Code Division Multiple Access (CDMA) system, a Wideband Code Division Multiple Access (WCDMA) system, a General Packet Radio Service (GPRS), a Long Term Evolution (LTE) system, a LTE Frequency Division Duplex (FDD) System, a LTE Time Division Duplex (TDD) system, an Advanced Long Term Evolution (LTE-A) system, a Universal Mobile Telecommunication System (UMTS), a Worldwide Interoperability for Microwave Access (WiMAX) communication system, a 5G mobile communication system, a New Radio (NR) system, an evolution system of the NR system, a LTE-based access to unlicensed spectrum (LTE-U) system, a NR-based access to unlicensed spectrum (NR-U) system, a Terrestrial Networks (TN) system, a Non-Terrestrial Networks (NTN) system, a Wireless Local Area Networks (WLAN), a Wireless Fidelity (Wi-Fi), a cellular Internet of Things system, a cellular passive Internet of Things system, a subsequent evolution system of the 5G NR system, or B5G, 6G, and subsequent evolution systems. In some embodiments of the present disclosure, "NR" may also be referred to as a 5G NR system or a 5G system. The 5G mobile communication system may include a Non-Standalone (NSA) networking and/or a Standalone (SA) networking.

The technical solutions provided by the embodiments of the present disclosure may also be applied to Machine Type Communication (MTC), Long Term Evolution-Machine (LTE-M), Device to Device (D2D) network, Machine to Machine (M2M) network, Internet of Things (IoT) network, or other networks. The IoT network may include, for example, Internet of Vehicles. The communication methods in the Internet of Vehicles system are collectively referred to as vehicle to other devices (Vehicle to X, V2X, X may represent anything), and for example, the V2X may include: Vehicle to Vehicle (V2V) communication, Vehicle to Infrastructure (V2I) communication, Vehicle to Pedestrian (V2P) communication, Vehicle to Network (V2N) communication, and the like.

1) UL subband in DL symbol/slot

The 3rd Generation Partnership Project (3GPP) R18 introduces XDD technology, that is, data can be sent and received simultaneously on different subbands in the same subframe. This technology is mainly used on the network device (such as base station) side. The current state is still maintained on the terminal side, that is, only sending or reception of data is supported in one subframe. FIG. 2 illustrates a schematic diagram of frequency domain resources according to the present disclosure. As illustrated in FIG. 2, in one DL slot, the middle subband 21 may be configured to be an UL subband on which UL data is allowed to be transmitted, and the other two subbands (i.e., subband 22 and subband 23) are configured to be DL subbands on which DL data is allowed to be transmitted.

2) Start and Length Indicator (SLIV)

A combination of a start value (S) and a length (L) corresponds to an index value (SLIV). A typical algorithm of the SLIV is as follows:

$$\text{If } (L-1) <= N/2, \text{ then } SLIV = N * (L-1) + S;$$

$$\text{Otherwise } SLIV = N * (N-L+1) + (N-1-S),$$

$$\text{Where, } 0 < L <= N-S.$$

N in the above algorithm is the value configured by the system.

For example, when the above algorithm for the SLIV is used to indicate the starting symbol and the consecutive symbol length of a segment of time domain resources, N may be the total number of symbols included in a slot.

For another example, when the above algorithm for the SLIV is used to indicate a starting Resource Block (RB) and an RB length of a segment of frequency domain resources, N may be a total number of RBs in a carrier.

3) Common Resource Block (CRB)

[**0057]** The center of subcarrier 0 of CRB0 is Point A. In 5G, different subcarrier spacings may be used by different resources, such as a Synchronization Signal and Physical Broadcast Channel (PBCH) block (SSB), a Physical Uplink Shared Channel (PUSCH) and a Physical Random Access Channel (PRACH) may have different subcarrier spacings. The CRB is equivalent to a ruler used to locate the locations of these resources. Here, the Point A is equivalent to a reference point in the frequency domain. Since the frequency bandwidth increases significantly in the 5G system, the flexibility of frequency domain resource allocation also increases accordingly. Therefore, in 5G, the concept of central frequency point is weakened, and Point A is used as a reference point in the frequency domain to allocate other resources.

[**0058]** At present, the XDD technology is introduced in related projects, but it is mainly used on the network device side. For a subframe that can simultaneously send and receive data on different subbands, when the network device performs transmission scheduling, there may be a problem that the frequency domain resource scheduled in a certain subframe does not match the configured transmission direction of the frequency domain resource in the subframe, and if the terminal device is unclear about the configured transmission direction of each subband in the subframe, the transmission cannot be performed.

[**0059]** Taking the configuration of the transmission directions of subbands in a subframe illustrated in FIG. 2 as an example, when the network device performs transmission for scheduling of the terminal device, it is best to schedule the time-frequency resource corresponding to the UL subband in the subframe to the terminal for UL transmission and/or schedule the time-frequency resource corresponding to the DL subband in the subframe to the terminal for DL reception, which requires the network device to be able to schedule resources with as small granularity as possible. However, based on factors such as increasing the scheduling speed, reducing the occupation of signaling resources, and saving power, the network device may not be able to realize sufficiently fine resource scheduling, and in this case, the network device may perform resource scheduling with big granularity, and the normal transmission between the terminal device and the network device cannot be realized.

[**0060]** For example, the network device schedules resources in which the subband 21 and the subband 22 are located in the subframe as UL resources to the terminal device for UL transmission. In this case, if the terminal device does not know the transmission directions configured respectively for the subband 21 and the subband 22, and performs UL transmission on the subband 21 and the subband 22 completely according to the scheduling of the network device, then since the subband 22 is a DL subband, the UL transmission of the terminal device on the subband 22 may conflict with the DL transmission of the network device on the subband 22. Specifically, for example, the network device only performs reception on the subband 21 according to the configuration of transmission directions of the subband 21 and subband 22, and ignores data sent by the terminal device on the subband 22, which results in failure of the UL transmission. In addition, the UL transmission of the terminal device on the subband 22 may also cause interference to the DL transmission of the network device on the subband 22.

[**0061]** For another example, the network device schedules resources in which the subband 21 and the subband 22 are located in the subframe as DL resources to the terminal device for DL reception. In this case, if the terminal device does not know the transmission directions configured respectively for the subband 21 and the subband 22, and performs DL reception on the subband 21 and the subband 22 completely according to the scheduling of the network device, then since the subband 21 is a UL subband, the DL reception of the terminal device on the subband 21 will result in failure of the reception of DL data. Specifically, for example, the network device only performs DL sending on the subband 22 according to the configuration of transmission directions of the subband 21 and subband 22. However, the terminal device performs DL reception on both subband 21 and subband 22, so that incorrect data is received by the terminal device and DL transmission is failed.

[**0062]** The solution shown in each subsequent embodiment of the present disclosure may provide a solution for configuring an UL frequency domain resource and/or a non-UL frequency domain resource that have the same time domain to the terminal device, so that the terminal device can know resource location(s) of frequency domain resource(s), with different transmission directions, having the same time domain, in a time domain resource unit, thus in an XDD transmission scenario, the terminal device can avoid conflict between the UL transmission and non-UL transmission when performing transmission based on scheduling of the network device.

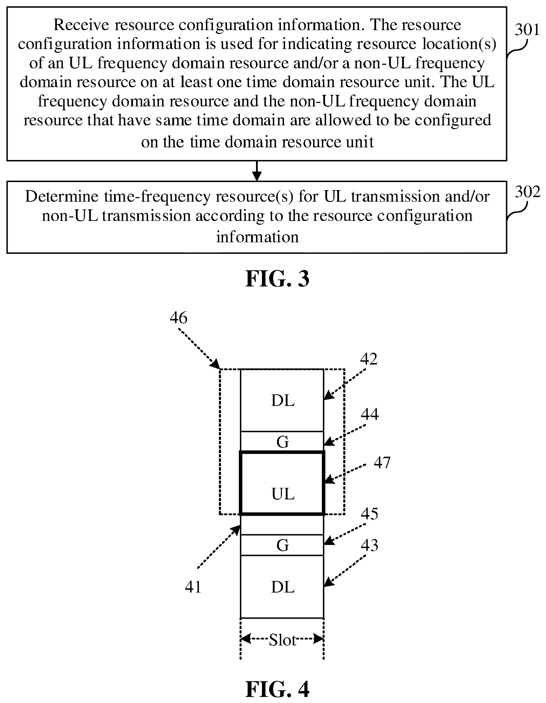

[**0063]** FIG. 3 illustrates a flowchart of a wireless transmission method according to an embodiment of the present disclosure. The method may be performed by a terminal device. The terminal device may be the terminal device 120 or the terminal device 130 in the network architecture illustrated in FIG. 1. The method may include the following operations.

[**0064]** In operation 301, resource configuration information is received. The resource configuration information is used for indicating resource location(s) of an UL frequency domain resource and/or a non-UL frequency domain resource on at least one time domain resource unit. The UL frequency domain resource and the non-UL frequency domain resource that have same time domain are allowed to be configured on the time domain resource unit.

[**0065]** In some embodiments, the terminal device may receive the above resource configuration information sent by the network device.

[**0066]** In some embodiments, the above time domain resource unit may be a symbol (such as an Orthogonal Frequency Division Multiplexing (OFDM) symbol), a slot, or a subframe.

[**0067]** In some embodiments, the above non-UL frequency domain resource may include at least one of a DL frequency domain resource and the first frequency domain resource.

[**0068]** In some embodiments, the first frequency domain resource may be a frequency domain resource adjacent to the UL frequency domain resource. The first frequency domain resource being adjacent to the UL frequency domain resource means that there is no other similar frequency domain resource between the first frequency domain resource and the UL frequency domain resource.

[**0069]** In some embodiments, the first frequency domain resource may be a resource not available for resource scheduling information (in this case, the first frequency domain resource may be referred to as a guard frequency domain resource or an unavailable frequency domain resource). The first frequency domain resource being not available for the resource scheduling information means that the first frequency domain resource is not available for the resource scheduling information sent by the network device to the terminal device. For example, the resource scheduling information sent by the network device to the terminal device is used to indicate a scheduling resource used for UL transmission, and when the scheduling resource used for UL transmission conflicts with the first frequency domain resource, the terminal device does not perform UL transmission on the first frequency domain resource, or the resource scheduling information sent by the network device to the terminal device is used to indicate a scheduling resource used for DL transmission, and when the scheduling resource used for DL transmission conflicts with the first frequency domain resource, the terminal device does not perform DL reception on the first frequency domain resource.

[**0070]** In some embodiments, a transmission direction of the first frequency domain resource is to-be-determined (in this case, the first frequency domain resource may be referred to as a flexible frequency domain resource or a to-be-determined frequency domain resource).

[**0071]** Here, the transmission direction being to-be-determined may mean that the first frequency domain resource may be indicated as an UL frequency domain resource or a DL frequency domain resource by subsequent other configuration information or scheduling information.

[**0072]** In some embodiments, the time-frequency resources within a period of time between the terminal device and the network device may be configured as resources for UL transmission, resources for DL transmission, resources not used for transmission, and/or resources for which the transmission direction is to-be-determined according to the frequency domains, that is, the network system supports to perform UL transmission and non-UL transmission on resources in different frequency domains at the same time, respectively. For example, when the network device performs UL transmission with one or more terminal devices on a part of the frequency domain resources of the carrier, at the same time, the network device may perform DL transmission with other one or more terminal devices on another part of the frequency domain resources of the same carrier. Alternatively, the UL transmission and DL transmission on different frequency domain resources are respectively performed between the network device and a certain terminal device at the same time.

[**0073]** In some embodiments, the above time domain resource unit on which the UL frequency domain resource and the non-UL frequency domain resource that have the same time domain are configured may be referred to as a Subband Full Duplex (SBFD) time domain resource unit, such as an SBFD symbol, an SBFD slot, an SBFD subframe, and the like.

[**0074]** In some embodiments, the resource configuration information may be configured through higher layer signaling, for example, the higher layer signaling may include at least one of Radio Resource Control (RRC) signaling and Media Access Control Control Element (MAC CE).

[**0075]** In other embodiments, the above resource configuration information may be indicated through Downlink Control Information (DCI).

[**0076]** In some embodiments, the above resource configuration information is sent by a single signaling/message, for example, the above resource configuration information is sent by a single RRC signaling/MAC CE/DCI.

[**0077]** In another embodiment, the above resource configuration information may be sent by multiple signals/-messages, for example, the above resource configuration information includes multiple pieces of indication information, and the multiple pieces of indication information are sent by different signals/messages. For example, the above resource configuration information includes indication information shared by at least one time domain resource unit and respective indication information corresponding to each of at least one time domain resource unit. The indication information shared by the at least one time domain resource unit may be sent through a RRC signaling or MAC CE, and the respective indication information corresponding to each of the at least one time domain resource unit may be sent through DCI.

[**0078]** The resource location of the frequency domain resource may include a Resource Block (RB), a RB group, a Subband, or the like in which the frequency domain resource is located.

[**0079]** In some embodiments, the resource configuration information being used for indicating resource location(s) of the UL frequency domain resource and/or the non-UL frequency domain resource on at least one time domain resource unit may be that the resource configuration information is used for indicating the resource location(s) of the UL frequency domain resource and/or the non-UL frequency domain resource on a part or all of the time domain resource units in the at least one time domain resource unit.

[**0080]** In some embodiments, the above configuring the UL/DL /first frequency domain resources may be referred to as configuring the transmission direction of each frequency domain resource unit on the carrier. For example, configuring one or more frequency domain resource units as UL frequency domain resource(s) may be referred to as configuring the transmission directions of the one or more frequency domain resource units as UL. For another example, configuring one or more frequency domain resource units as DL frequency domain resource(s) may be referred to as configuring the transmission directions of the one or more frequency domain resource units as DL. For another example, configuring one or more frequency domain resource units as the first frequency domain resource(s) may be referred to as configuring the transmission directions of the one or more frequency domain resource units as to-be-determined/not used for transmission.

[**0081]** In operation 302, time-frequency resource(s) for UL transmission and/or non-UL transmission is/are determined according to the resource configuration information.

[**0082]** In some embodiments, the terminal device may determine the resource location(s) of the UL frequency domain resource and/or the non-UL frequency domain resource on at least one time domain resource unit configured by the network according to the above resource configuration information. Subsequently, when performing data transmission, the terminal device may perform data transmission according to the resource location(s) of the UL frequency domain resource and/or the non-UL frequency domain resource on at least one time domain resource unit. For example, when performing DL reception on the at least one time domain resource unit, the terminal device takes data received at a resource location corresponding to the DL frequency domain resource as DL data. Alternatively, when performing UL transmission on the at least one time domain resource unit, the terminal device sends UL data at a resource location corresponding to the UL frequency domain resource.

[**0083]** For example, after the terminal device determines the resource location(s) of the UL frequency domain resource and/or the non-UL frequency domain resource on at least one time domain resource unit configured by the network according to the resource configuration information, if the terminal device receives the scheduling information from the network device, the terminal device may determine, according to the scheduling information, the scheduling resource(s) scheduled for UL or DL transmission on each above time domain resource. If the time domain of the scheduling resource(s) is the same as that of the at least one time domain resource unit, the frequency domain resource location, on at least one time domain resource unit, actually used for UL or DL transmission, may be determined according to the frequency domain resource(s) used for the UL or DL in the scheduling resource(s), and the resource location(s) of UL frequency domain resource and/or non-UL frequency domain resource on at least one time domain resource unit.

[**0084]** Taking the above scheduling resource being a resource scheduled by the network device for UL transmission of the terminal device as an example, the terminal device may acquire an intersection of the resource location of the frequency domain resource in the scheduling resource and the resource location of the UL frequency domain resource on at least one time domain resource unit to obtain the resource location of the frequency domain resource, on at least one time domain resource unit, for the UL transmission of the terminal device, and perform UL transmission on the determined resource location.

[**0085]** For example, FIG. 4 illustrates a schematic diagram of an UL transmission configuration according to an embodiment of the present disclosure. As illustrated in FIG. 4, based on the above resource configuration information, on the terminal device side, a frequency domain resource portion 41 in the middle of a DL slot is configured to be an UL frequency domain resource, UL data is allowed to be transmitted on the UL subband, the frequency domain resource portion 42 and the frequency domain resource portion 43 on two sides of the frequency domain resource portion 41 are configured to be DL frequency domain resources, and the frequency domain resource portion 44 and the frequency domain resource portion 45 between the UL frequency domain resource and the DL frequency domain resource are configured to be the first frequency domain resources. As illustrated in FIG. 4, the UL frequency domain resource is adjacent to the first frequency domain resources, that is, the frequency domain resource portion 44 and the frequency domain resource portion 45 are adjacent to the frequency domain resource portion 41, respectively.

[**0086]** The network device performs scheduling for the UL transmission of the terminal device, and the UL scheduling resource indicated by the network device corresponds to the frequency domain resource portion 46 in the slot illustrated in FIG. 4. The frequency domain resource portion 46 covers a part of the frequency domain resource portion 41 (which is configured to be an UL frequency domain resource by the resource configuration information), the frequency domain resource portion 44 (which is configured to be the first frequency domain resource by the resource configuration information, that is, which is not used for transmission), and the frequency domain resource portion 42 (which is configured to be a DL frequency domain resource by the resource configuration information). When performing UL transmission on this slot, the terminal device acquires the intersection of the frequency domain resource portion 46 and the frequency domain resource portion 41, i.e., the frequency domain resource portion 47 in FIG. 4, and performs UL transmission on the frequency domain resource portion 47.

[**0087]** In summary, according to the solution for the resource configuration shown in the embodiment of the present disclosure, in a scenario in which an UL frequency domain resource and a non-UL frequency domain resource that have the same time domain are allowed to be configured on the same time domain resource unit, the terminal device receives resource configuration information for indicating resource location(s) of an UL frequency domain resource and/or a non-UL frequency domain resource on at least one time domain resource unit, thereby enabling the terminal to determine a time-frequency two-dimensional configuration in an XDD transmission scenario, avoiding a conflict between UL transmission and non-UL transmission in the XDD transmission scenario, and improving transmission efficiency of a wireless communication system.

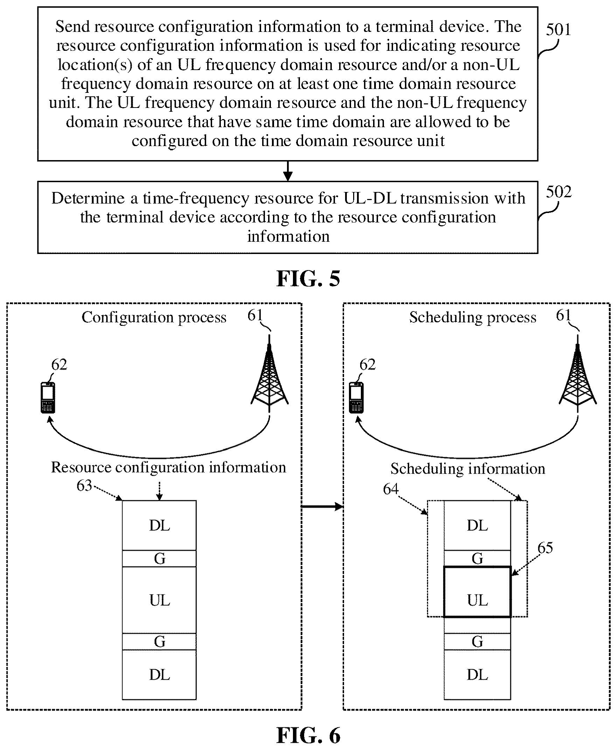

[**0088]** FIG. 5 illustrates a flowchart of a wireless transmission method according to an embodiment of the present disclosure. The method may be performed by a network device. The network device may be the network device 110 in the network architecture illustrated in FIG. 1. The method may include the following operations.

[**0089]** In operation 501, resource configuration information is sent to a terminal device. The resource configuration information is used for indicating resource location(s) of an UL frequency domain resource and/or a non-UL frequency domain resource on at least one time domain resource unit. The UL frequency domain resource and the non-UL frequency domain resource that have same time domain are allowed to be configured on the time domain resource unit.

[**0090]** In operation 502, a time-frequency resource for UL transmission and/or non-UL transmission with the terminal device is determined according to the resource configuration information.

[**0091]** In some embodiments, the network device may determine, according to the resource configuration information, the resource location(s) of the UL frequency domain resource and/or the non-UL frequency domain resource, on at least one time domain resource unit, configured to the terminal device. Subsequently, when performing data transmission, the network device may perform UL and/or DL scheduling and transmission to the terminal device according to the resource location(s) of the UL frequency domain resource and/or the non-UL frequency domain resource on the at least one time domain resource unit. For example, when DL transmission is performed on the at least one time domain resource unit, the network device sends DL data to the terminal device at a resource location corresponding to the DL frequency domain resource, or when UL transmission is performed on the at least one time domain resource unit, the network device takes data received at a resource location corresponding to the UL frequency domain resource as UL data sent by the terminal device.

[**0092]** For example, after determining, according to the resource configuration information, the resource location(s) of the UL frequency domain resource and/or the non-UL frequency domain resource, on the at least one time domain resource unit, configured to the terminal device, when subsequently performing transmission resource scheduling for the terminal device, the network device may send scheduling information to the terminal device according to the resource location(s) of the UL frequency domain resource and/or the non-UL frequency domain resource, on the at least one time domain resource unit, configured to the terminal device, to indicate the scheduling resource(s), and determine, according to the scheduling information, the scheduling resource(s), scheduled for UL or DL transmission on each time domain resource. If the time domain of the scheduling resource(s) is the same as that of the at least one time domain resource unit, the frequency domain resource location, on at least one time domain resource unit, actually used for UL or DL transmission for the terminal device, may be determined according to the frequency domain resource(s) used for the UL or DL in the scheduling resource(s), and the resource location(s) of UL frequency domain resource and/or non-UL frequency domain resource on at least one time domain resource unit.

[**0093]** Taking the above scheduling resource being a resource scheduled by the network device for UL transmission of the terminal device as an example, the network device may acquire an intersection of the resource location of the frequency domain resource in the scheduling resource and the resource location of the UL frequency domain resource on at least one time domain resource unit to obtain the resource location of the frequency domain resource, on at least one time domain resource unit, for the UL transmission of the terminal device, and perform UL reception on the determined resource location.

[**0094]** For example, still taking FIG. 4 as an example, the network device performs scheduling for the UL transmission of the terminal device, and when performing the UL transmission on the slot, the network device takes the intersection of the frequency domain resource portion 46 and the frequency domain resource portion 41, i.e., the frequency domain resource portion 47 in FIG. 4, and takes the data received on the frequency domain resource portion 47 as the UL data sent by the terminal device.

[**0095]** In summary, according to the solution for the resource configuration shown in the embodiment of the present disclosure, in a scenario in which an UL frequency domain resource and a non-UL frequency domain resource that have the same time domain are allowed to be configured on the same time domain resource unit, the network device sends, to the terminal device, resource configuration information for indicating resource location(s) of an UL frequency domain resource and/or a non-UL frequency domain resource on at least one time domain resource unit, thereby enabling the terminal to determine a time-frequency two-dimensional configuration in an XDD transmission scenario, avoiding a conflict between UL transmission and non-UL transmission in the XDD transmission scenario, and improving transmission efficiency of a wireless communication system.

[**0096]** Based on the solutions illustrated in FIG. 3 and FIG. 5 described above, FIG. 6 illustrates a schematic diagram of resource configuration and scheduling according to an exemplary embodiment of the present disclosure. As illustrated in FIG. 6, in the configuration process, the network device 61 sends resource configuration information to the terminal device 62 for configuring the time-frequency resource 63. Taking the time-frequency resources 63 corresponding to multiple time-domain resource units (such as multiple slots) on a carrier as an example, U represents an UL frequency domain resource, D represents a DL frequency domain resource, and G represents the first frequency domain resource (for which the transmission direction is to-be-determined or not used for transmission).

[**0100]** In the scheduling process, the network device 61 sends scheduling information to the terminal device 62, and the scheduling information is used for indicating the scheduling resources 64. Taking the scheduling resources 64 being resources scheduled to the terminal device 62 for UL transmission as an example, the network device 61 and the terminal device 62 acquire the intersection (i.e., the time-frequency resource 65 in FIG. 6) between the scheduling resources 64 and the time-frequency resource corresponding to the UL frequency domain resource of the time-frequency resources 63, and the transmission of the UL data is performed through the time-frequency resource 65.

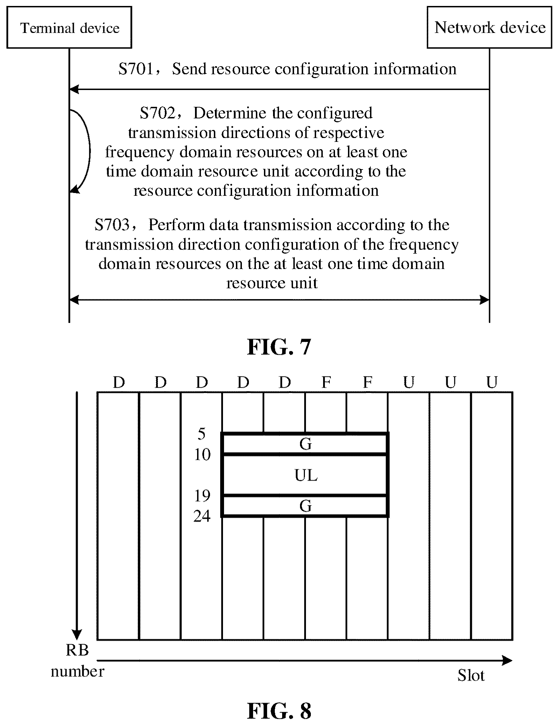

[**0101]** Based on the above solutions illustrated in FIG. 3 and FIG. 5, FIG. 7 illustrates a flowchart of a wireless transmission method according to an embodiment of the present disclosure. The method may be performed by a terminal device and a network device interactively. The above terminal device and the network device may be the terminal device 120 and the network device 110 in the network architecture illustrated in FIG. 1, or the above terminal device and the network device may be the terminal device 130 and the network device 110 in the network architecture illustrated in FIG. 1. As illustrated in FIG. 7, the method may include the following operations.

[**0102]** In operation 701, the network device sends resource configuration information to the terminal device, and the terminal device receives the resource configuration information.

[**0103]** The network device may generate resource configuration information for the terminal device, and send the generated resource configuration information to the terminal device.

[**0104]** The above resource configuration information is used for indicating resource location(s) of an UL frequency domain resource and/or a non-UL frequency domain resource on at least one time domain resource unit. The UL frequency domain resource and the non-UL frequency domain resource that have same time domain are allowed to be configured on the time domain resource unit.

[**0105]** In some embodiments, the above at least one time domain resource unit is all time domain resource units in a configuration period, or the at least one time domain resource unit is a part of time domain resource units in a configuration period.

[**0106]** In some embodiments, the above resource configuration information includes the first frequency domain resource configuration parameter shared by at least one first time domain resource unit, and/or the resource configuration information includes the respective second frequency domain resource configuration parameter corresponding to each of the at least one first time domain resource unit.

[**0107]** The at least one first time domain resource unit is time domain resource unit(s), on which an UL frequency domain resource and a non-UL frequency domain resource that have the same time domain are configured, among the at least one time domain resource unit, or the at least one first time domain resource unit is all of the at least one time domain resource unit.

[**0108]** In the above embodiment, the configuration of an UL frequency domain resource and/or a non-UL frequency domain resource may be performed through the resource configuration information for each time domain resource unit (such as an SBFD slot or an SBFD symbol), that needs to be configured with an UL frequency domain resource and a non-UL frequency domain resource at a same time, within a period of time. In some embodiments, for a time-domain resource unit in this period of time that does not need to be configured with an UL frequency domain resource and a non-UL frequency domain resource at a same time, no additional configuration is required. For example, a time-domain resource unit in this period of time that does not need to be configured with the UL frequency domain resource and the non-UL frequency domain resource at a same time may be configured through other configuration information besides the above resource configuration information, for example, the corresponding time-domain resource unit on a carrier may be completely configured as an UL time-domain resource unit, a DL time-domain resource unit or a to-be-determined/-flexible/unavailable/guard time-domain resource unit by using a Time Division Duplex (TDD) configuration.

[**0109]** Alternatively, in the above embodiment, the configuration of an UL/DL frequency domain resource may be performed through the above resource configuration information for all time domain resource units within a period of time. For time domain resource units that do not need to be configured with an UL frequency domain resource and a non-UL frequency domain resource at a same time, these time domain resource units may be configured as UL time domain resource units, DL time domain resource units, or to-be-determined/flexible/unavailable/guard time domain resource units through the resource configuration information.

[**0110]** In the above embodiment, for at least one first time domain resource unit within a period of time, the at least one first time domain resource unit may share the first frequency domain resource configuration parameter in the resource configuration information, that is, the at least one first time domain resource unit corresponds to the same first frequency domain resource configuration parameter. In this case, the configuration(s) for the UL frequency domain resource and/or the non-UL frequency domain resource of the at least one first time domain resource unit are the same. In this case, the above resource configuration information only needs to carry the shared first frequency domain resource configuration parameter to indicate the frequency domain resource configuration for multiple first time domain resource units, thus less signaling resources are occupied.

[**0111]** Alternatively, in the above embodiment, for at least one first time domain resource unit within a period of time, the at least one first time domain resource unit has respective second frequency domain resource configuration parameters, that is, each of the at least one first time domain resource unit corresponds to respective first frequency domain resource configuration parameter(s), or the first frequency domain resource configuration parameter(s) for at least one first time domain resource unit is not shared. In this case, the configuration(s) for the UL frequency domain resource and/or non-UL frequency domain resource of at least one first time domain resource unit may be different from each other, partially or completely identical. In this case, the frequency domain resource configuration(s) of at least one first time domain resource unit may be independently indicated through the resource configuration information, thus the flexibility in the configuration for frequency domain resources is high.

[**0112]** Alternatively, in the above embodiment, for at least one first time domain resource unit within a period of time, the at least one first time domain resource unit may share the first frequency domain resource configuration parameter in the resource configuration information, and the at least one first time domain resource unit may further have respective second frequency domain resource configuration parameter(s). In this case, the resource configuration information may uniformly indicate a part of the frequency domain resources of at least one first time domain resource unit through the first frequency domain resource configuration parameter, and another part of the frequency domain resources of at least one first time domain resource unit is independently indicated by respective second frequency domain resource configuration parameter(s) of the at least one first time domain resource unit, so that flexibility in occupation and configuration of signaling resources can be taken into account.

[**0113]** For example, the at least one first time domain resource unit may share the configuration for the UL frequency domain resource, and the at least one first time domain resource unit may further have respective configuration(s) for the DL frequency domain resource and/or respective configuration(s) for the first frequency domain resource. That is, respective configuration(s) for the UL frequency domain resource of the at least one first time domain resource unit is the same, and respective configuration(s) for the DL frequency domain resource and/or respective configuration(s) for the first frequency domain resource of the at least one first time domain resource unit may be the same or different.

[**0114]** In some embodiments, the first frequency domain resource configuration parameter and the second frequency domain resource configuration parameter include at least one of the first indication information, the second indication information, or the third indication information, respectively.

[**0115]** The first indication information is used to indicate the resource location of the UL frequency domain resource.

[**0116]** The second indication information is used to indicate a resource location of the first frequency domain resource. The first frequency domain resource is not used for transmission, or a transmission direction of the first frequency domain resource is to-be-determined. The first frequency domain resource is a frequency domain resource adjacent to the UL frequency domain resource.

[**0117]** The third indication information is used to indicate a resource location of a DL frequency domain resource.

[**0118]** In the above embodiment, the resource configuration information may include indication information for indicating at least one of the UL frequency domain resource, a DL frequency domain resource, or the first frequency domain resource.

[**0119]** In the above embodiment, the first indication information, the second indication information, or the third indication information may directly indicate the resource location of the corresponding frequency domain resource, or may indicate the resource location of the corresponding frequency domain resource in combination with other indication information or other known information (also referred to as indirect indication).

[**0120]** In some embodiments, in a case that the resource configuration information includes the first frequency domain resource configuration parameter, the first frequency domain resource configuration parameter includes at least one of the first indication information, the second indication information, or the third indication information.

[**0121]** Alternatively, in a case that the resource configuration information includes the second frequency domain resource configuration parameter, the second frequency domain resource configuration parameter includes at least one of the first indication information, the second indication information, or the third indication information.

[**0122]** Alternatively, in a case that the resource configuration information includes the first frequency domain resource configuration parameter and the second frequency domain resource configuration parameter, the first frequency domain resource configuration parameter includes one or two of the first indication information, the second indication information, and the third indication information, and the second frequency domain resource configuration parameter includes other part or all of indication information, other than the indication information included in the first frequency domain resource, among the first indication information, the second indication information, and the third indication information.

[**0123]** In the above embodiment, in a case that the resource configuration information includes only the first frequency domain resource configuration parameter or only the second frequency domain resource configuration parameter, the first frequency domain resource configuration parameter or the second frequency domain resource configuration parameter may include one, two, or all of the first indication information, the second indication information, or the third indication information. In a case that the first frequency domain resource configuration parameter or the second frequency domain resource configuration parameter includes one or two of the three types of indication information, the resource location of the frequency domain resource not indicated by the first frequency domain resource configuration parameter or the second frequency domain resource configuration parameter may be derived from the resource location of the frequency domain resource indicated by the first frequency domain resource configuration parameter or the second frequency domain resource configuration parameter.

[**0124]** In the above embodiment, in a case that the resource configuration information includes both the first frequency domain resource configuration parameter and the second frequency domain resource configuration parameter, the first frequency domain resource configuration parameter and the second frequency domain resource configuration parameter respectively indicate a part of the three types of indication information. For example, the first frequency domain resource configuration parameter may indicate a resource location of an UL frequency domain resource on at least one first time domain resource unit, and the second frequency domain resource configuration parameter may indicate a resource location of a DL frequency domain resource and/or a resource location of the first frequency domain resource on at least one first time domain resource unit. For another example, the first frequency domain resource configuration parameter may indicate a resource location of a DL frequency domain resource on at least one first time domain resource unit, and the second frequency domain resource configuration parameter may indicate a resource location of an UL frequency domain resource and/or a resource location of the first frequency domain resource on at least one first time domain resource unit. For another example, the first frequency domain resource configuration parameter may indicate a resource location of the first frequency domain resource on at least one first time domain resource unit, and the second frequency domain resource configuration parameter may indicate a resource location of an UL frequency domain resource and/or a resource location of a DL frequency domain resource on at least one first time domain resource unit.

[**0125]** In some embodiments, the first indication information is used to indicate a reference frequency domain location and a bandwidth of the UL frequency domain resource.

[**0126]** In the above embodiment, the resource location of the UL frequency domain resource may be directly obtained through the reference frequency domain location and the bandwidth of the UL frequency domain resource indicated by the first indication information, which is determined without need of other information, so that the indication efficiency is high.

[**0127]** In the above embodiment, the first indication information may directly indicate the resource location(s) of the UL frequency domain resource(s) on the at least one first time domain resource unit by indicating the reference frequency domain location and the bandwidth of the UL frequency domain resource.

[**0128]** In some embodiments, the reference frequency domain location of the UL frequency domain resource is a location of a starting frequency domain resource unit of the UL frequency domain resource, or the reference frequency domain location of the UL frequency domain resource is a location of a middle frequency domain resource unit of the UL frequency domain resource.

[**0129]** The bandwidth of the UL frequency domain resource is the number of frequency domain resource units of the UL frequency domain resource.

[**0130]** Here, one or multiple consecutive (which may mean that the numbers in the carrier are consecutive) frequency domain resource units may constitute one UL frequency domain resource, and the bandwidth of one UL frequency domain resource may be the number of frequency domain resource units included in the UL frequency domain resource.

[**0131]** In some embodiments, in a case that the reference frequency domain location of the UL frequency domain resource is the location of the starting frequency domain resource unit of the UL frequency domain resource, the first indication information is used to indicate, through a manner of Start and Length Indicator (SLIV), the location of the starting frequency domain resource unit of the UL frequency domain resource and the number of frequency domain resource units of the UL frequency domain resource.

[**0132]** In the above embodiment, the reference frequency domain location indicated by the first indication information may be a location of a starting frequency domain resource unit or a middle frequency domain resource unit of the UL frequency domain resource, for example, the reference frequency domain location indicated by the first indication information may be number of the starting frequency domain resource unit or the middle frequency domain resource unit of the UL frequency domain resource. For example, in a carrier, respective frequency domain resource units may be started from 0 and sequentially numbered from low to high in frequency domain.

[**0133]** In the above embodiment, the bandwidth indicated by the first indication information may be the number of frequency domain resource units of the UL frequency domain resource.

[**0134]** In a case that the terminal device obtains the reference frequency domain location and the bandwidth through the first indication information, the terminal device may calculate the resource location of the UL frequency domain resource, that is, the numbers/ a range of numbers of respective frequency domain resource units included in the UL frequency domain resource.

[**0135]** When the reference frequency domain location indicated by the first indication information is the location of the starting frequency domain resource unit of the UL frequency domain resource, the location of the starting frequency domain resource unit of the UL frequency domain resource and the number of frequency domain resource units of the UL frequency domain resource may be indicated through a manner of SLIV, for example, by the following algorithm of SLIV:

$$\text{If } (L-1) <= N/2, \text{ then SLIV} = N * (L-1) + S;$$

$$\text{Otherwise SLIV} = N * (N-L+1) + (N-1-S),$$

$$\text{Where, } 0 < L <= N-S.$$

[**0136]** In this case, in the above algorithm, L is the location/number of the starting frequency domain resource unit of the UL frequency domain resource, S is the number of frequency domain resource units of the UL frequency domain resource, and N is the number of frequency domain resource units included in a carrier.

[**0137]** In some embodiments, the frequency domain resource unit is a Resource Block (RB), a RB group, or a subband.

[**0138]** In the above embodiment, the frequency domain resource unit may be set to be an RB, an RB group, or a subband, and an application range is wide.

[**0139]** In the above embodiment, the resource configuration information may indicate the frequency domain resource according to the granularity of RB, or may indicate the frequency domain resource according to the granularity of RB group (that is, the transmission directions of respective RBs in one RB group are configured to be the same), or may indicate the frequency domain resource according to the granularity of subband (that is, the transmission directions of respective RBs in one subband are configured to be the same).

[**0140]** In some embodiments, the first indication information may also indicate the frequency domain location of the UL frequency domain resource through manners other than the reference frequency domain location of the UL frequency domain resource and the bandwidth.

[**0141]** For example, the above first indication information may indirectly indicate the frequency domain location of the UL frequency domain resource through the reference frequency domain location of the UL frequency domain resource, for example, in a case that the bandwidth of the UL frequency domain resource is configured in advance or specified in the protocol, the first indication information may indicate the reference frequency domain location of the UL frequency domain resource, and the terminal device may calculate the frequency domain location of the UL frequency domain resource in combination with the reference frequency domain location of the UL frequency domain resource indicated by the first indication information and the bandwidth of the UL frequency domain resource configured in advance or specified in the protocol.

[**0142]** For another example, the above first indication information may indirectly indicate the frequency domain location of the UL frequency domain resource through the bandwidth of the UL frequency domain resource, for example, in a case that the reference frequency domain location of the UL frequency domain resource is configured in advance or specified in the protocol, the first indication information may indicate the bandwidth of the UL frequency domain resource, and the terminal device may calculate the frequency domain location of the UL frequency domain resource in combination with the bandwidth indicated by the first indication information and the reference frequency domain location of the UL frequency domain resource configured in advance or specified in the protocol.

[**0143]** In the above embodiment, the resource location of the UL frequency domain resource may be obtained indirectly through bandwidth or reference frequency domain location of the UL frequency domain resource indicated by the first indication information, so that less signaling resources are required to be occupied.

[**0144]** In some embodiments, the above resource configuration information may include the first indication information and the second indication information. Further, the above resource configuration information may not include the third indication information.

[**0145]** In the above embodiment, the above resource configuration information only needs to include the first indication information and the second indication information, and does not need to directly indicate the DL frequency domain resource, thereby saving a part of the signaling resources.

[**0146]** In some embodiments, the resource location of the DL frequency domain resource is determined by the resource location of the UL frequency domain resource and the resource location of the first frequency domain resource in the following four cases.

[**0147]** In a case that the resource configuration information includes the first frequency domain resource configuration parameter, the first frequency domain resource configuration parameter includes the first indication information and the second indication information. According to the solution, the signaling resources occupied when the resource configuration information indicates the UL frequency domain resource and the first frequency domain resource can be reduced.

[**0148]** Alternatively, in a case that the resource configuration information includes the second frequency domain resource configuration parameter, the second frequency domain resource configuration parameter includes the first indication information and the second indication information. According to the solution, the flexibility when the resource configuration information indicates the UL frequency domain resource and the first frequency domain resource can be improved.

[**0149]** Alternatively, in a case that the resource configuration information includes the first frequency domain resource configuration parameter and the second frequency domain resource configuration parameter, the first frequency domain resource parameter includes the first indication information and the second frequency domain resource parameter includes the second indication information. According to the solution, the signaling resource occupied when the resource configuration information indicates the UL frequency domain resource can be reduced, and the flexibility when indicating the first frequency domain resource can be ensured.

[**0150]** Alternatively, in a case that the resource configuration information includes the first frequency domain resource configuration parameter and the second frequency domain resource configuration parameter, the first frequency domain resource parameter includes the second indication information and the second frequency domain resource parameter includes the first indication information. According to the solution, the signaling resource occupied when the resource configuration information indicates the first frequency domain resource can be reduced, and the flexibility when indicating the UL frequency domain resource can be ensured.

[**0151]** In the above embodiment, in a case that the resource configuration information indicates the UL frequency domain resource and/or the non-UL frequency domain resource on at least one first time domain resource unit through the first frequency domain resource configuration parameter, the above resource configuration information may include the second indication information and the first indication information shared by at least one first time domain resource unit.

[**0152]** Alternatively, in a case that the resource configuration information indicates the UL frequency domain resource and/or the non-UL frequency domain resource on at least one first time domain resource unit through the second frequency domain resource configuration parameter, the above resource configuration information may include the first indication information and second indication information respectively corresponding to each of the at least one first time domain resource unit.

[**0153]** Alternatively, in a case that the resource configuration information indicates the UL frequency domain resource and/or the non-UL frequency domain resource on at least one first time domain resource unit through the first frequency domain resource configuration parameter and the second frequency domain resource configuration parameter, the above resource configuration information may include the first indication information shared by at least one first time domain resource unit and the second indication information respectively corresponding to each of the at least one first time domain resource unit.

[**0154]** In a case that the resource configuration information includes the first indication information and the second indication information, the DL frequency domain resource in the first time domain resource unit may be determined by the resource location of the UL frequency domain resource and the resource location of the first frequency domain resource. For example, the terminal device may determine the resource location of the UL frequency domain resource and the resource location of the first frequency domain resource according to the resource configuration information, and then determine other resource locations in the carrier other than the UL frequency domain resource and the first frequency domain resource as the resource location of the DL frequency domain resource.

[**0155]** In some embodiments, the above second indication information includes a bandwidth value of the first frequency domain resource.

[**0156]** In the above embodiment, the terminal device may indirectly determine the resource location of the first frequency domain resource by combining the bandwidth value of the first frequency domain resource directly indicated by the second indication information with other known information (for example, the reference frequency domain location of the first frequency domain resource configured in advance or specified in the protocol, the resource location of the UL frequency domain resource directly/indirectly indicated by the first indication information, the resource location of the DL frequency domain resource directly/indirectly indicated by the third indication information, etc.).

[**0157]** In the above embodiment, when the resource configuration information indicates the first frequency domain resource, only the bandwidth value of the first frequency domain resource needs to be carried, thereby reducing the signaling resource occupied when the first frequency domain resource is indicated.

[**0158]** For example, in a case that the above resource configuration information includes the first indication information and the second indication information, the above second indication information is used to indicate a bandwidth value of the first frequency domain resource.

[**0159]** For example, in a case that the resource configuration information includes the first indication information and the second indication information, and the second indication information includes a bandwidth value of the first frequency domain resource, the first indication information may be used to indicate a reference frequency domain location and a bandwidth of the UL frequency domain resource.

[**0160]** Of course, in a case that the resource configuration information includes the first indication information and the second indication information, and the second indication information includes a bandwidth value of the first frequency domain resource, the first indication information may indicate a reference frequency domain location or a bandwidth of the UL frequency domain resource.

[**0161]** In some embodiments, the second indication information is used to indicate a single guard bandwidth value. The single guard bandwidth value is used to indicate a bandwidth of at least two first frequency domain resources that have the same bandwidth.

[**0162]** Alternatively, the second indication information is used to indicate a single guard bandwidth value. The single guard bandwidth value is used to indicate a bandwidth of a single first frequency domain resource.

[**0163]** Alternatively, the second indication information is used to indicate at least two guard bandwidth values. The at least two protection bandwidth values are used to indicate a bandwidth of each of at least two first frequency domain resources, respectively.

[**0164]** In some embodiments, taking the frequency domain resources being arranged in an order from high to low or from low to high as an example, in a case that the carrier includes two first frequency domain resources with the same bandwidth, since the first frequency domain resource is adjacent to the UL frequency domain resource, the UL frequency domain resource is located between the two first frequency domain resources, or the two first frequency domain resources are distributed on two sides of the UL frequency domain resource (the subsequent descriptions of the locational relationship between different frequency domain resources are all based on this example, and elaborations are omitted in the subsequent descriptions). In this case, the second indication information may include a single guard bandwidth value, and the single guard bandwidth value is used to indicate a bandwidth of at least two first frequency domain resources. That is, the bandwidths of the two first frequency domain resources on two sides of the UL frequency domain resource are both the single guard bandwidth value. Further, in a case that at least two (that is, two or more) first frequency domain resources exist in a carrier, two or more first frequency domain resources may exist in the carrier, and in this case, bandwidths of the two or more first frequency domain resources may be the same, that is, only a single guard bandwidth value is needed for indication.

[**0165]** Alternatively, in a case that one side of the UL frequency domain resource is located at the edge of the carrier, only the first frequency domain resource needs to be configured on the other side of the UL frequency domain resource with respect to the edge of the carrier. In this case, the second indication information may include a single guard bandwidth value, and the bandwidth of the first frequency domain resource is the single guard bandwidth value.

[**0166]** Alternatively, in a case that two first frequency domain resources with the same bandwidth are included in the carrier, the second indication information may indicate one of the two first frequency domain resources through two guard bandwidth values respectively. In this case, the bandwidths of the first frequency domain resources respectively set on two sides of the UL frequency domain resource may be the same or different. Alternatively, in a case that there are two or more first frequency domain resources in the carrier, a bandwidth of each of the two or more first frequency domain resources may be indicated by one guard bandwidth value. The application range of this solution is wider.

[**0167]** In addition to the bandwidth value, the second indication information may indicate the resource location of the first frequency domain resource in other manners. For example, the second indication information may indicate the reference frequency domain location and the bandwidth of the first frequency domain resource.

[**0168]** For example, the second indication information is used to indicate, through a manner of SLIV, a location of a starting frequency domain resource unit of the first frequency domain resource and the number of frequency domain resource units of the first frequency domain resource

[**0169]** Alternatively, the second indication information is used to indicate a location of a middle frequency domain resource unit of the first frequency domain resource and the number of frequency domain resource units of the first frequency domain resource.

[**0170]** In some embodiments, the bandwidth value of the first frequency domain resource may be configured by the network device itself, or may be determined by the network device according to the capability information reported by the terminal device.

[**0171]** In some embodiments, the resource configuration information may include the first indication information and the third indication information. Further, the resource configuration information may not include the second indication information.

[**0172]** In the above embodiment, the resource configuration information only needs to include the first indication information and the third indication information, and the first frequency domain resource does not need to be directly indicated, thereby saving a part of the signaling resources.

[**0173]** In the above embodiment, in a case that the resource configuration information indicates the UL frequency domain resource and/or the non-UL frequency domain resource on at least one first time domain resource unit through the first frequency domain resource configuration parameter, the above resource configuration information may include the first indication information and the third indication information that are shared by at least one first time domain resource unit.

[**0174]** Alternatively, in a case that the resource configuration information indicates the UL frequency domain resource and/or the non-UL frequency domain resource on at least one first time domain resource unit through the second frequency domain resource configuration parameter, the resource configuration information may include the first indication information and the third indication information that correspond to each of the at least one first time domain resource unit.

[**0175]** Alternatively, in a case that the resource configuration information indicates the UL frequency domain resource and/or the non-UL frequency domain resource on at least one first time domain resource unit through the first frequency domain resource configuration parameter and the second frequency domain resource configuration parameter, the resource configuration information may include the first indication information shared by at least one first time domain resource unit and the third indication information corresponding to each of the at least one first time domain resource unit.

[**0176]** In some embodiments, the third indication information includes the first DL indication information for indicating a reference frequency domain location and a bandwidth of the DL frequency domain resource.

[**0177]** In the above embodiment, the third indication information may directly indicate the resource location(s) of the DL frequency domain resource(s) on at least one first time domain resource unit by indicating the reference frequency domain location and the bandwidth of the DL frequency domain resource, which is determined without need of other information, so that the indication efficiency is high.

[**0178]** In some embodiments, the first DL indication information includes a single DL frequency domain resource indication value, and the single DL frequency domain resource indication value is used to indicate a reference frequency domain location and a bandwidth of the DL frequency domain resource located on one side of the UL frequency domain resource.

[**0179]** The DL frequency domain resources located on two sides of the UL frequency domain resource are symmetrically distributed around the UL frequency domain resource.

[**0180]** In this solution, only a single DL frequency domain resource indication value is needed to indicate the resource locations of two DL frequency domain resources, thus less signaling is occupied.

[**0181]** In the above embodiment, if it is specified in advance that two sides of the UL frequency domain resource have DL frequency domain resources, and the DL frequency domain resources are symmetrically distributed around the UL frequency domain resource, then the third indication information may indicate the reference frequency domain location and bandwidth of the DL frequency domain resource located on a specified side of the UL frequency domain resource through a single DL frequency domain resource indication value, and the frequency domain location of the DL frequency domain resource located on the other side of the UL frequency domain resource may be determined by the terminal device according to the resource location of the UL frequency domain resource and the resource location of the DL frequency domain resource located on the specified side of the UL frequency domain resource.

[**0182]** In some embodiments, the first DL indication information includes at least one DL frequency domain resource indication value, and the at least one DL frequency domain resource indication value is used to indicate a reference frequency domain location and a bandwidth of the at least one DL frequency domain resource, respectively.

[**0183]** In the above embodiment, the third indication information may indicate resource locations of multiple DL frequency domain resources through multiple DL frequency domain resource indication values, respectively.

[**0184]** In this solution, the resource locations of multiple DL frequency domain resources are indicated through multiple DL frequency domain resource indication values, thus this solution can be applied to any configuration situation of the DL frequency domain resource, and has a wide application range.

[**0185]** In some embodiments, the reference frequency domain location of the DL frequency domain resource is a location of a starting frequency domain resource unit of the DL frequency domain resource, or the reference frequency domain location of the DL frequency domain resource is a location of a middle frequency domain resource unit of the DL frequency domain resource.

[**0186]** The bandwidth of the DL frequency domain resource is the number of frequency domain resource units of the DL frequency domain resource.

[**0187]** One or multiple consecutive frequency domain resource units may constitute one DL frequency domain resource, and a bandwidth of a DL frequency domain resource may be the number of frequency domain resource units included in the DL frequency domain resource.

[**0188]** In some embodiments, in a case that the reference frequency domain location of the DL frequency domain resource is the location of the starting frequency domain resource unit of the DL frequency domain resource, the DL frequency domain resource indication value is used to indicate, through a manner of SLIV, the location of the starting frequency domain resource unit of the DL frequency domain resource and the number of frequency domain resource units of the DL frequency domain resource.

[**0189]** In some embodiments, the resource location of the first frequency domain resource is determined by the resource location of the UL frequency domain resource and the resource location of the DL frequency domain resource in the following four cases.

[**0190]** In a case that the resource configuration information includes the first frequency domain resource configuration parameter, the first frequency domain resource configuration parameter includes the first indication information and the third indication information. According to the solution, the signaling resources occupied when the resource configuration information indicates the UL frequency domain resource and the DL frequency domain resource can be reduced.

[**0191]** Alternatively, in a case that the resource configuration information includes the second frequency domain resource configuration parameter, the second frequency domain resource configuration parameter includes the first indication information and the third indication information. According to the solution, the flexibility when the resource configuration information indicates the UL frequency domain resource and the DL frequency domain resource can be improved.

[**0192]** Alternatively, in a case that the resource configuration information includes the first frequency domain resource configuration parameter and the resource configuration information includes the second frequency domain resource configuration parameter, the first frequency domain resource parameter includes the first indication information and the second frequency domain resource parameter includes the third indication information. According to the solution, the signaling resource occupied when the resource configuration information indicates the UL frequency domain resource can be reduced, and the flexibility when indicating the DL frequency domain resource can be ensured.

[**0193]** Alternatively, in a case that the resource configuration information includes the first frequency domain resource configuration parameter and the resource configuration information the second frequency domain resource configuration parameter, the first frequency domain resource parameter includes the third indication information and the second frequency domain resource parameter includes the first indication information. According to the solution, the signaling resource occupied when the resource configuration information indicates the DL frequency domain resource can be reduced, and the flexibility when indicating the UL frequency domain resource can be ensured.

[**0194]** For example, in a case that the above resource configuration information includes the first indication information and the third indication information, the first frequency domain resource in the first time domain resource unit may be determined through the resource location of the UL frequency domain resource and the resource location of the DL frequency domain resource. For example, the terminal device may determine the resource location of the UL frequency domain resource and the resource location of the DL frequency domain resource according to the resource configuration information, and then determine other resource location in the carrier other than the UL frequency domain resource and the non-UL frequency domain resource as the resource location of the first frequency domain resource.

[**0195]** In some embodiments, the third indication information includes the second DL indication information, and the second DL indication information is used to indicate a bandwidth of the DL frequency domain resource.

[**0196]** In the above embodiment, the terminal device may indirectly determine the resource location of the DL frequency domain resource by combining the bandwidth value of the DL frequency domain resource directly indicated by the third indication information with other known information (for example, the reference frequency domain location of the DL frequency domain resource configured in advance or specified in the protocol, the resource location of the UL frequency domain resource directly/indirectly indicated by the first indication information, the resource location of the first frequency domain resource directly/indirectly indicated by the second indication information, etc.).

[**0197]** For example, in a case that the frequency domain resource pattern of at least one first time domain resource unit in the carrier is known, the terminal device may indirectly determine the resource location of the DL frequency domain resource by combining the bandwidth value of the DL frequency domain resource directly indicated by the third indication information with other known information.

[**0198]** The frequency domain resource pattern may be used to indicate an arrangement order of the UL frequency domain resource, the DL frequency domain resource, and/or the first frequency domain resource on a time domain resource unit. For example, the frequency domain resource pattern "D-G-U-G-D" indicates the frequency domain resources in the time domain resource unit are arranged in the order of "DL frequency domain resource-first frequency domain resource-UL frequency domain resource- first frequency domain resource- DL frequency domain resource" from top to bottom, or the frequency domain resource pattern "D-G-U" indicates the frequency domain resources in the time domain resource unit are arranged in the order of "DL frequency domain resource-first frequency domain resource-UL frequency domain resource" from top to bottom.

[**0199]** In the above solution, in a case of combining other information, the resource configuration information only needs to carry the bandwidth of the DL frequency domain resource to indirectly indicate the resource location of the DL frequency domain resource, thus less signaling resources are occupied.

[**0200]** In some embodiments, the resource location of the first frequency domain resource is determined by the resource location of the UL frequency domain resource and the bandwidth of the DL frequency domain resource. Specifically, for example, in the following four cases, the resource location of the first frequency domain resource is determined by the resource location of the UL frequency domain resource and the bandwidth of the DL frequency domain resource.

[**0201]** The resource configuration information includes the first frequency domain resource configuration parameter shared by at least one first time domain resource unit, and the first frequency domain resource configuration parameter includes the first indication information and the third indication information.

[**0202]** Alternatively, the resource configuration information includes the respective second frequency domain resource configuration parameter corresponding to each of at least one first time domain resource unit, and the second frequency domain resource configuration parameter includes the first indication information and the third indication information.

[**0203]** Alternatively, the resource configuration information includes the first frequency domain resource configuration parameter shared by at least one first time domain resource unit and the respective second frequency domain resource configuration parameter corresponding to each of at least one first time domain resource unit, the first frequency domain resource parameter includes the first indication information, and the second frequency domain resource parameter includes the third indication information.

[**0204]** Alternatively, the resource configuration information includes the first frequency domain resource configuration parameter shared by at least one first time domain resource unit and the respective second frequency domain resource configuration parameter corresponding to each of at least one first time domain resource unit, the first frequency domain resource parameter includes the third indication information, and the second frequency domain resource parameter includes the first indication information.

[**0205]** For example, in a case that the above resource configuration information includes the first indication information and the third indication information, the first frequency domain resource in the first time domain resource unit may be determined by the resource location of the UL frequency domain resource and the bandwidth of the DL frequency domain resource. For example, the terminal device determines the resource location of the UL frequency domain resource and the bandwidth of the DL frequency domain resource according to the above resource configuration information, and then determines the bandwidth of the first frequency domain resource according to the bandwidth of the UL frequency domain resource, the bandwidth of the DL frequency domain resource, and the carrier bandwidth. Since the first frequency domain resource is adjacent to the UL frequency domain resource, the resource location of the first frequency domain resource can be determined by combining the location of the UL frequency domain resource and the bandwidth of the first frequency domain resource. Afterwards, the terminal device may determine other resource location in the carrier besides the UL frequency domain resource and the first frequency domain resource to be the resource location of the UL frequency domain resource.

[**0206]** In some embodiments, the second DL indication information includes a total bandwidth of DL frequency domain resource(s) on the carrier. In the above solution, the resource configuration information only needs to carry the total bandwidth of the DL frequency domain resource(s) to indirectly indicate the resource location(s) of the DL frequency domain resource(s), thus less signaling is occupied.

[**0207]** Alternatively, the second DL indication information is used to indicate a bandwidth of each of at least two DL frequency domain resources on the carrier. In the above solution, the resource configuration information carries the respective bandwidth of each DL frequency domain resource, thus the solution may be applied to more configuration situations of the DL frequency domain resources, and has a wide application range.

[**0208]** In some embodiments, in a case that the carrier includes two first frequency domain resources, and the two first frequency domain resources are symmetrically distributed around the UL frequency domain resource, a bandwidth of any one first frequency domain resource is the first bandwidth. The first bandwidth is (carrier bandwidth - bandwidth of the UL frequency domain resource - total bandwidth of DL frequency domain resource(s) on the carrier) / 2.

[**0209]** In a case that the carrier includes a single first frequency domain resource, a bandwidth of the first frequency domain resource is the second bandwidth. The second bandwidth is (carrier bandwidth - bandwidth of the UL frequency domain resource - total bandwidth of the DL frequency domain resource(s) on the carrier). In a case that the second DL indication information is used to indicate a bandwidth of each of at least two DL frequency domain resources on the carrier, the total bandwidth of the DL frequency domain resources on the carrier may be a sum of bandwidths of at least two DL frequency domain resources.

[**0210]** In a case that the first frequency domain resources are symmetrically distributed on two sides of the UL frequency domain resources, the bandwidth of the first frequency domain resource on any side of the UL frequency domain resource is (carrier bandwidth - bandwidth of the UL frequency domain resource - total bandwidth of the DL frequency domain resource)/2.

[**0211]** In a case that the first frequency domain resource is located on one side of the UL frequency domain resource, the bandwidth of the first frequency domain resource is: carrier bandwidth - bandwidth of the UL frequency domain resource - total bandwidth of the DL frequency domain resource(s).

[**0212]** In the above embodiment, in a case that it is specified in advance that the first frequency domain resources are symmetrically distributed on two sides of the UL frequency domain resource, or the first frequency domain resource is located on one side of the UL frequency domain resource, if the resource configuration information includes the first indication information and the third indication information, the terminal device may calculate the bandwidth(s) of the first frequency domain resource(s) based on the carrier bandwidth, the bandwidth of the UL frequency domain resource, and the total bandwidth of the DL frequency domain resource(s) only through the total bandwidth of the DL frequency domain resource(s) on the carrier indicated by the third indication information. Furthermore, the terminal device determines the resource location of the first frequency domain resource, and then determines the resource location of the DL frequency domain resource. For example, the terminal device determines the resource location in the carrier other than the first frequency domain resource and the DL frequency domain resource to be the resource location of the DL frequency domain resource.

[**0213]** Alternatively, in a case that it is specified in advance that the DL frequency domain resources are symmetrically distributed on two sides of the UL frequency domain resource, if the resource configuration information includes the first indication information and the third indication information, the terminal device may calculate the bandwidth of the first frequency domain resource according to the carrier bandwidth, the bandwidth of the UL frequency domain resource, and the bandwidths of the two DL frequency domain resources only through the bandwidth of each of two DL frequency domain resources indicated by the third indication information, and then determine the resource location of the first frequency domain resource, and further determine the resource location of the DL frequency domain resource. For example, the terminal device determines the resource location in the carrier other than the first frequency domain resource and the DL frequency domain resource to be the resource location of the DL frequency domain resource. Alternatively, the terminal device may directly calculate the resource locations of the DL frequency domain resources according to the bandwidths of the two DL frequency domain resources (in this case, the DL frequency domain resources are located on two sides in the carrier, that is, the frequency domain resource pattern is "D-G-U-G-D"), and then determine other resource locations except the resource location of the UL frequency domain resource and the resource locations of the DL frequency domain resources to be the resource locations of the first frequency domain resources.

[**0214]** In some embodiments, in a case that the resource configuration information includes the first frequency domain resource configuration parameter, the first frequency domain resource configuration parameter includes the fourth indication information. Alternatively, in a case that the resource configuration information includes the second frequency domain resource configuration parameter, the second frequency domain resource configuration parameter includes the fourth indication information. The fourth indication information is used to indicate, through a manner of bitmap, a transmission direction of each frequency domain resource unit in a carrier. The transmission direction includes UL, DL, or other.

[**0215]** In the above embodiment, the resource configuration information may directly indicate, through a manner of bitmap, the transmission direction of each frequency domain resource unit in the carrier. The bitmap may be uniformly indicated through the fourth indication information shared by at least one first time domain resource unit, or the bitmap may be separately indicated through the fourth indication information corresponding to each of at least one first time domain resource unit.

[**0216]** In the above solution, the resource configuration information may directly indicate, through a manner of bitmap, the transmission direction of each frequency domain resource unit, and the indication result is more direct, the processing requirement for the terminal device is low, and the indication flexibility is high.

[**0217]** In some embodiments, in a case that the resource configuration information includes the first frequency domain resource configuration parameter, the first frequency domain resource configuration parameter includes the fifth indication information. Alternatively, in a case that the resource configuration information includes the second frequency domain resource configuration parameter, the second frequency domain resource configuration parameter includes the fifth indication information.

[**0218]** The fifth indication information is used to indicate an index corresponding to the first combination. The first combination is a combination of respective transmission directions of frequency domain resource units in a carrier. The transmission directions include UL, DL or other.

[**0219]** Alternatively, the fifth indication information is used to indicate an index corresponding to the second combination. The second combination is a location combination of frequency domain resource units in specified transmission direction(s) in the carrier. The specified transmission direction(s) include(s) at least one of UL, DL, and other.

[**0220]** In the above solution, the resource configuration information may indicate, through a manner of index, a combination of transmission directions of frequency domain resource units, and it is not necessary to separately indicate for each frequency domain resource unit, and the less signaling resources are occupied.

[**0221]** In some embodiments, the transmission direction of the frequency domain resource unit being other indicates that the transmission direction of the frequency domain resource unit is to-be-determined, or indicates that the frequency domain resource unit is not used for transmission.

[**0222]** In the above embodiment, if the resource configuration information directly indicates, through a manner of bitmap, the transmission direction of each frequency domain resource unit in the carrier, it is necessary to occupy a large number of signaling resources. Based on this, the resource configuration information may indirectly indicate the transmission direction of each frequency domain resource unit in the carrier through an index, corresponding to a combination of the respective transmission directions of frequency domain resource units in the carrier, that is set in advance, or through an index, corresponding to a combination of the locations of the frequency domain resource units with specified transmission direction(s) in the carrier.

[**0223]** Here, the above index may be uniformly indicated through the fifth indication information shared by at least one first time domain resource unit, or the above index may be separately indicated through the fifth indication information corresponding to each of at least one first time domain resource unit.

[**0224]** In some embodiments, the frequency domain resource unit is an RB, an RB group, or a subband.

[**0225]** In some embodiments, the resource configuration information further includes a time domain indication parameter.

[**0226]** The time domain indication parameter is used to indicate a time domain location of a time domain resource unit on which an UL frequency domain resource and a non-UL frequency domain resource that have the same time domain are configured.

[**0227]** The first frequency domain resource configuration parameter and/or the second frequency domain resource configuration parameter only indicates the configuration of the frequency domain resource(s), but the time domain location of the time domain resource unit on which the UL frequency domain resource and the non-UL frequency domain resource that have the same time domain are configured are not indicated. Therefore, in the above embodiment, the resource configuration information may further include a time domain indication parameter for indicating the time domain location of the time domain resource unit (such as an SBFD slot/SBFD symbol) on which the UL frequency domain resource and the non-UL frequency domain resource that have the same time domain are configured.

[**0228]** The above time domain indication parameter may be used to indicate time domain location(s) of time domain resource unit(s), on which an UL frequency domain resource and a non-UL frequency domain resource that have the same time domain are configured, in one configuration period.

[**0229]** For example, in some embodiments, the time domain indication parameter is used to indicate, through a manner of bitmap, whether each time domain resource unit in a configuration period is configured with the UL frequency domain resource and the non-UL frequency domain resource that have the same time domain.

[**0230]** Alternatively, the time domain indication parameter is used to indicate, through a manner of bitmap, whether each DL time domain resource unit and/or the flexible time domain resource unit in the configuration period is configured with the UL frequency domain resource and the non-UL frequency domain resource that have the same time domain.

[**0231]** In some embodiments, the time domain resource unit is a slot, a subslot, or a symbol.

[**0232]** In the above embodiment, the time domain indication parameter may respectively indicate regarding respective time domain resource units in a configuration period, to indicate whether the corresponding time domain resource unit is a time domain resource unit on which the UL frequency domain resource and the non-UL frequency domain resource that have the same time domain are configured.

[**0233]** Alternatively, the above time domain indication parameter may respectively indicate regarding the DL time domain resource unit and/or the flexible time domain resource unit in a configuration period, to indicate whether the corresponding time domain resource unit is a time domain resource unit on which the UL frequency domain resource and the non-UL frequency domain resource that have the same time domain are configured. The UL time domain resource unit is not indicated.

[**0234]** The above configuration period may refer to a TDD configuration period or an SBFD period.

[**0235]** For the combination of various indication manners for the frequency domain resource configuration according to the above embodiments, several combinations are described below exemplarily by taking the time domain resource unit on which the UL frequency domain resource and the non-UL frequency domain resource that have the same time domain are configured being a SBFD symbol as examples.

[**0236]** Method 1: The frequency domain resource configurations of all SBFD symbols are the same.

[**0237]** Method 1.1: A resource location of an UL frequency domain resource (referred to as a location of an UL portion) is configured, and the bandwidth size of the first frequency domain resource (referred to as a guard bandwidth) may be determined through the network configuration or a report of the UE capability. Here, the location of the UL portion may be configured by a manner of "starting point + bandwidth" or a manner of "middle RB + bandwidth".

[**0238]** For example, in an embodiment, the terminal device receives the first indication information, and the first indication information is used to indicate a location of the UL portion in the frequency domain, specifically, for example, the location of the UL portion refers to a starting point and a bandwidth configuration of the UL portion. For example, the starting resource block S and the width (the number L of RBs) of the UL portion are indicated through the manner of SLIV. Reference of the RB index is made to the CRB. FIG. 8 illustrates a schematic diagram of resource configuration according to an embodiment of the present disclosure. As illustrated in FIG. 8, on a carrier with a bandwidth of 100 RB, the starting RB of the UL portion is 10 and the number of RBs is 20, then SLIV = 1910, and the first indication information ULsubband location = 1910.

[**0239]** In the above embodiment, the terminal device may receive the second indication information, and the second indication information is used to indicate the guard bandwidth. The guard bandwidth may be configured through one value (which can save signaling overhead), or multiple values (when the UL portion is located on one side in the carrier, there is already an inter-carrier spacing between the upper sideband and the DL transmission of the adjacent carrier, and the guard bandwidth may be less. Therefore, different values may be configured for the upper sideband and the lower sideband). When the guard bandwidth has only one value, this value applies to the upper sideband and the lower sideband of the UL portion. When the guard bandwidth has two values, the values are applied to the upper sideband and the lower sideband of the UL portion, respectively. For example, the second indication information Guardband = 5.

[**0240]** In the above embodiment, the terminal device may receive a time domain indication parameter, and the time domain indication parameter is used to indicate symbol(s) or slot(s) including an UL portion. For example, the time domain indication parameter indicates, through a bitmap, whether each symbol in a TDD configuration period/SBFD period includes the UL portion. As illustrated in FIG. 8, all symbols in slots 3 to 6 in a TDD configuration period/SBFD period are configured with UL subband, and the indication is {0, 0,..., 1, 1, 1,..., 0, 0, 0}, where "1" corresponds to the indexes of all symbols in slots 3 to 6. For another example, the time domain indication parameter indicates, through a bitmap, that each symbol of the DL symbol(s) and/or the flexible symbol(s) in a TDD configuration period/SBFD period includes an UL portion. As illustrated in FIG. 8, all symbols in slots 3 to 6 in a TDD configuration period/SBFD period are configured with UL subband, and the indication is {0, 0,..., 1, 1, 1,..., 1}, where "1" corresponds to the indexes of all symbols in slots 3 to 6. For another example, the time domain indication parameter indicates, through a bitmap, that each slot in a TDD configuration period/SBFD period includes an UL portion. As illustrated in FIG. 8, all symbols of slots 3 to 6 in a TDD configuration period/SBFD period are configured with UL subband, and the indication is {0, 0, 0, 1, 1, 1, 1, 1, 0, 0, 0}.

[**0241]** Thereafter, the terminal device may transmit data according to the transmission direction configuration in the frequency domain. For example, the terminal may send data on the UL Subband, and may receive data on a resource other than the UL Subband and the guard bandwidth.

[**0242]** In the above method 1.1, the locations of the UL portions and the locations of the guard bandwidths of all SBFD symbols are uniformly indicated, for example, only one SLIV value + one bandwidth value are needed to indicate the locations of the UL portions and the locations of the guard bandwidths of all SBFDs, and less signaling is occupied.

[**0243]** Method 1.2: Locations of the UL portion and a location of the DL portion are configured. The location of the UL/DL portion may be configured by a manner of "starting point + bandwidth", or may be configured by a manner of "middle RB + bandwidth". There may be one or more DL portions.

[**0244]** For example, in one embodiment, the terminal device receives the first indication information, and the first indication information is used to indicate a location of the UL portion in the frequency domain, specifically, for example, the location of the UL portion refers to a starting point and a bandwidth configuration of the UL portion. For example, the starting resource block S and the width (the number L of RBs) of the UL portion are indicated through a manner of SLIV. Reference of the RB index is made to the CRB. As illustrated in FIG. 8, on a carrier with a bandwidth of 100 RB, the starting RB of the UL portion is 10 and the number of RBs is 20, then SLIV = 1910, and the first information ULsubband location = 1910.

[**0245]** In the above embodiment, the terminal device may receive the third indication information, and the third indication information is used to indicate a location of the DL portion. The location of the DL portion may be indicated by one piece of location information, for example, one piece of location information corresponds to one DL portion, and other DL portion(s) and this DL portion are symmetrically distributed on two sides of the UL portion. This method is applied to a case that the UL portion is located in the middle of the carrier bandwidth. Alternatively, the location of the DL portion may be indicated by multiple pieces of location information, for example, two pieces of location information correspond to two separated DL portions. This method is applied to any configuration including two DL portions. As illustrated in FIG. 8, the second information includes the configuration of two DL portion locations, {SLIV1 = 400, SLIV2 = 7425}, and locations of the corresponding DL portion are RB0-RB4 and RB25-RB99.

[**0246]** In the above embodiment, the terminal device may receive a time domain indication parameter, and the time domain indication parameter is used to indicate symbol(s) or slot(s) including an UL portion. For example, the time domain indication parameter indicates, through a bitmap, whether each symbol in a TDD configuration period/SBFD period includes the UL portion. As illustrated in FIG. 8, all symbols in slots 3 to 6 in a TDD configuration period/SBFD period are configured with UL subband, and the indication is {0, 0,..., 1, 1, 1,..., 0, 0, 0}, where "1" corresponds to the indexes of all symbols in slots 3 to 6. For another example, the time domain indication parameter indicates, through a bitmap, that each symbol of the DL symbol(s) and/or the flexible symbol(s) in a TDD configuration period/SBFD period includes an UL portion. As illustrated in FIG. 8, all symbols in slots 3 to 6 in a TDD configuration period/SBFD period are configured with UL subband, and the indication is {0, 0,..., 1, 1, 1,..., 1}, where "1" corresponds to the indexes of all symbols in slots 3 to 6. For another example, the time domain indication parameter indicates, through a bitmap, that each slot in a TDD configuration period/SBFD period includes an UL portion. As illustrated in FIG. 8, all symbols of slots 3-6 in a TDD configuration period/SBFD period are configured with UL subband, and the indication is {0, 0, 0, 1, 1, 1, 1, 1, 0, 0, 0}.

[**0247]** Thereafter, the terminal device may transmit data according to the transmission direction configuration in the frequency domain. For example, the terminal may send data on the UL Subband, and may receive data on a resource other than the UL Subband and the guard bandwidth.

[**0248]** In the above method 1.2, the locations of the UL portions and the locations of the DL portions of all SBFD symbols are uniformly indicated, for example, only a small number of SLIV values (two or three SLIV values) are needed to indicate the locations of the UL portions and the locations of the DL portions of all SBFDs, and the less signaling is occupied.

[**0249]** Method 1.3: A location of the UL portion and a bandwidth of the DL portion are configured. The bandwidth of the DL portion may be determined by a total bandwidth or two independent bandwidths.

[**0250]** For example, in one embodiment, the terminal device receives the first indication information, and the first indication information is used to indicate a location of the UL portion in the frequency domain, specifically, for example, the location of the UL portion refers to a starting point and a bandwidth configuration of the UL portion. For example, the starting resource block S and the width (the number L of RBs) of the UL portion are indicated through a SLIV. The reference of the RB index is made to the CRB. As illustrated in FIG. 8, on a carrier with a bandwidth of 100 RB, the starting RB of the UL portion is 10 and the number of RBs is 20, then SLIV = 1910, and the first information ULsubband location = 1910.

[**0251]** In the above embodiment, the terminal device receives the third indication information, and the third indication information is used to indicate a bandwidth value of the DL portion, and an unavailable bandwidth (or referred to as a to-be-determined/flexible/guard bandwidth) may be calculated according to the bandwidth, that is, the unavailable bandwidth = (carrier bandwidth - bandwidth of UL portion - bandwidth of DL portion)/2. In this case, the unavailable bandwidths are evenly distributed on two sides of the bandwidth of the UL portion, and the remaining portion is the DL portion. For the frequency domain resource pattern of "U-G-D", the unavailable bandwidth is only on one side of the bandwidth of the UL portion, that is, the unavailable bandwidth = carrier bandwidth - bandwidth of UL portion - bandwidth of DL portion. The method is applied to any configuration of the UL portion, and the signaling overhead is less. As illustrated in FIG. 8, it is assumed that the bandwidth of DL portion = 80, the unavailable bandwidth = (100-10-80)/2 = 5, and further, the specific locations of the UL portion, the DL portion and the unavailable bandwidth may be obtained according to the first indication information.

[**0252]** In the above embodiment, the terminal device may receive a time domain indication parameter, and the time domain indication parameter is used to indicate symbol(s) or slot(s) including an UL portion. For example, the time domain indication parameter indicates, through a bitmap, whether each symbol in a TDD configuration period/SBFD period includes the UL portion. As illustrated in FIG. 8, all symbols in slots 3 to 6 in a TDD configuration period/SBFD period are configured with UL subband, and the indication is {0, 0,..., 1, 1, 1,..., 0, 0, 0}, where "1" corresponds to the indexes of all symbols in slots 3 to 6. For another example, the time domain indication parameter indicates, through a bitmap, that each symbol of the DL symbol(s) and/or the flexible symbol(s) in a TDD configuration period/SBFD period includes an UL portion. As illustrated in FIG. 8, all symbols in slots 3 to 6 in a TDD configuration period/SBFD period are configured with UL subband, and the indication is {0, 0,..., 1, 1, 1,..., 1}, where "1" corresponds to the indexes of all symbols in slots 3 to 6. For another example, the time domain indication parameter indicates, through a bitmap, that each slot in a TDD configuration period/SBFD period includes an UL portion. As illustrated in FIG. 8, all symbols of slots 3 to 6 in a TDD configuration period/SBFD period are configured with UL subband, and the indication is {0, 0, 0, 1, 1, 1, 1, 1, 0, 0, 0}.

[**0253]** Thereafter, the terminal device may transmit data according to the transmission direction configuration in the frequency domain. For example, the terminal may send data on the UL Subband, and may receive data on a resource other than the UL Subband and the guard bandwidth.

[**0254]** In the above method 1.3, the locations of the UL portions and the locations of the DL portions of all SBFD symbols are uniformly indicated, for example, only one SLIV value + one or two bandwidth values are needed to indicate the locations of the UL portions and the locations of the DL portions of all SBFDs, and less signaling is occupied.

[**0255]** Method 1.4: The transmission direction of each frequency domain unit (RB or RBG or subband) is configured through a bitmap. The transmission direction includes UL, DL, to-be-determined/flexible/unavailable/guard.

[**0256]** For example, in one embodiment, the terminal device receives the fourth indication information, and the fourth indication information indicates, through a bitmap, a transmission direction of each RB/RB group in the frequency domain. As illustrated in FIG. 8, for example, the bitmap is {1, 1,..., 0, 2, 2,..., 2, 0,..., 1, 1}, where "1" represents for DL transmission, "0" represents the unavailable resource, and "2" represents for UL transmission.

[**0257]** In the above embodiment, the terminal device may receive a time domain indication parameter, and the time domain indication parameter is used to indicate symbol(s) or slot(s) including an UL portion. For example, the time domain indication parameter indicates, through a bitmap, whether each symbol in a TDD configuration period/SBFD period includes the UL portion. As illustrated in FIG. 8, all symbols in slots 3 to 6 in a TDD configuration period/SBFD period are configured with UL subband, and the indication is {0, 0,..., 1, 1, 1,..., 0, 0, 0}, where "1" corresponds to the indexes of all symbols in slots 3 to 6. For another example, the time domain indication parameter indicates, through a bitmap, that each symbol of the DL symbol(s) and/or the flexible symbol(s) in a TDD configuration period/SBFD period includes an UL portion. As illustrated in FIG. 8, all symbols in slots 3 to 6 in a TDD configuration period/SBFD period are configured with UL subband, and the indication is {0, 0,..., 1, 1, 1,..., 1}, where "1" corresponds to the indexes of all symbols in slots 3 to 6. For another example, the time domain indication parameter indicates, through a bitmap, that each slot in a TDD configuration period/SBFD period includes an UL portion. As illustrated in FIG. 8, all symbols of slots 3 to 6 in a TDD configuration period/SBFD period are configured with UL subband, and the indication is {0, 0, 0, 1, 1, 1, 1, 1, 0, 0, 0}.

[**0258]** Thereafter, the terminal device may transmit data according to the transmission direction configuration in the frequency domain. For example, the terminal may send data on the UL Subband, and may receive data on a resource other than the UL Subband and the guard bandwidth.

[**0259]** In the above solution 1.4, the locations of the UL portions and the locations of the DL portions of all SBFD symbols are uniformly indicated through a bitmap, and only one bitmap is needed to indicate the transmission direction of each RB/RB group in all SBFD symbols, and a more intuitive indication can be provided in the configuration of the frequency domain.

[**0260]** Method 1.5: A manner of index is used for configuration. N combinations of configurations for the UL portion, DL portion and the to-be-determined/flexible/unavailable/guard portion are stipulated in the protocol, and each combination corresponds to an index value.

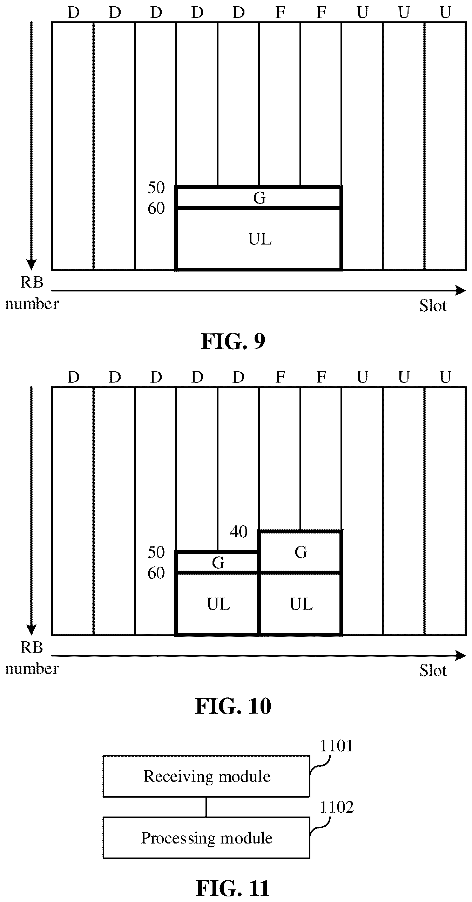

[**0261]** For example, in one embodiment, the terminal device receives the fifth indication information, and the fifth indication information indicates an index of a frequency domain transmission direction combination. An index of a transmission direction combination corresponds to a combination of a configuration for the UL portion, DL portion and the to-be-determined/flexible/unavailable/guard portion. The combinations of configurations for the UL portion, DL portion and the to-be-determined/flexible/unavailable/guard portion are stipulated in the protocol. For example, as illustrated in Table 1, the RB group is the smallest indication granularity, and the size of the RB group is related to the carrier bandwidth. Typically, the size of the $\text{RB group} = \lfloor \text{carrier bandwidth/N} \rfloor$, where $\lfloor * \rfloor$ represents rounding down, and N is a positive integer representing the number of RB groups. As illustrated in Table 1, the number of RB groups = 10. FIG. 9 illustrates a schematic diagram of resource configuration according to an embodiment of the present disclosure. As illustrated in FIG. 9, the DL portions are RB0-RB49, the unavailable portions are RB50-59, and the UL portions are RB60-RB99, and the first information is the index 3 of the frequency domain transmission direction combination.

[**0262]** An index of a transmission direction combination may correspond to a part of the combination of configurations for the UL portion, the DL portion and the to-be-determined/flexible/unavailable/guard portion, for example, the combination of methods 1.1-1.3. For example, an index of a transmission direction combination may correspond to the configuration for the UL portion, the to-be-determined/flexible/unavailable/guard portion is configured by a higher layer signaling, and the DL portion is derived according to the bandwidth of the system/bandwidth part (BWP), the configuration for the UL portion, and the configuration for the to-be-determined/flexible/unavailable/guard portion. As illustrated in Table 2, "1" represents an UL portion, and "0" represents a non-UL portion.

Table 1

| Index of frequency domain transmission direction combination | Transmission direction Combination |
|---|---|
| 0 | [D, D, D, D, D, D, D, D, D, D] |
| 1 | [D, D, D, F, U, U, U, U, U, U] |

(continued)

| Index of frequency domain transmission direction combination | Transmission direction Combination |
|---|---|
| 2 | [D, D, D, D, F, F, U, U, U, U] |
| 3 | [D, D, D, D, D, F, U, U, U, U] |
| 4 | [U, U, U, U, U, U, U, U, U, U] |
| 5 | [D, D, F, U, U, U, F, D, D, D] |
| 6 | [D, D, F, U, U, F, D, D, D, D] |
| 7 | [D, D, F, U, F, D, D, D, D, D] |

Table 2

| Index of frequency domain transmission direction combination | Transmission direction Combination |
|---|---|
| 0 | [0, 0, 0, 0, 0, 0, 0, 0, 0, 0] |
| 1 | [0, 0, 0, 0, 1, 1, 1, 1, 1, 1] |
| 2 | [0, 0, 0, 0, 0, 1, 1, 1, 1, 1] |
| 3 | [0, 0, 0, 0, 0, 0, 1, 1, 1, 1] |
| 4 | [0, 0, 0, 0, 0, 0, 0, 1, 1, 1] |
| 5 | [0, 0, 0, 1, 1, 1, 0, 0, 0, 0] |
| 6 | [0, 0, 0, 0, 1, 1, 0, 0, 0, 0] |
| 7 | [0, 0, 0, 1, 0, 0, 0, 0, 0, 0] |

[**0263]** In the above embodiment, the terminal device may receive a time domain indication parameter, and the time domain indication parameter is used to indicate symbol(s) or slot(s) including an UL portion. For example, the time domain indication parameter indicates, through a bitmap, whether each symbol in a TDD configuration period/SBFD period includes the UL portion. As illustrated in FIG. 8, all symbols in slots 3 to 6 in a TDD configuration period/SBFD period are configured with UL subband, and the indication is {0, 0,..., 1, 1, 1,..., 0, 0, 0}, where "1" corresponds to the indexes of all symbols in slots 3 to 6. For another example, the time domain indication parameter indicates, through a bitmap, that each symbol of the DL symbol(s) and/or the flexible symbol(s) in a TDD configuration period/SBFD period includes an UL portion. As illustrated in FIG. 8, all symbols in slots 3 to 6 in a TDD configuration period/SBFD period are configured with UL subband, and the indication is {0, 0,..., 1, 1, 1,..., 1}, where "1" corresponds to the indexes of all symbols in slots 3 to 6. For another example, the time domain indication parameter indicates, through a bitmap, that each slot in a TDD configuration period/SBFD period includes an UL portion. As illustrated in FIG. 8, all symbols of slots 3 to 6 in a TDD configuration period/SBFD period are configured with UL subband, and the indication is {0, 0, 0, 1, 1, 1, 1, 1, 0, 0, 0}.

[**0264]** Thereafter, the terminal device may transmit data according to the transmission direction configuration in the frequency domain. For example, the terminal may send data on the UL Subband, and may receive data on a resource other than the UL Subband and the guard bandwidth.

[**0265]** In the above solution 1.5, the locations of the UL portions and the locations of the DL portions of all SBFD symbols are uniformly indicated through an index for the transmission directions, and only one index value is needed to indicate the transmission direction of each RB/RB group in all SBFD symbols, which can reduce the occupation of signaling resources.

[**0266]** Method 2: The configuration for frequency domain resources of each SBFD symbol is independent.

[**0267]** Method 2.1: The frequency domain resources are configured for each SBFD symbol in a period. Any one method in method 1 may be used for the configuration of frequency domain resources.

[**0268]** For example, in one embodiment, the terminal device receives a time domain indication parameter, and the time domain indication parameter is used to indicate symbol(s) or slot(s) including an UL portion. For example, the time domain indication parameter indicates, through a bitmap, that each symbol in a TDD configuration period includes an UL portion. FIG. 10 illustrates a schematic diagram of resource configuration according to an embodiment of the present disclosure. As illustrated in FIG. 10, all symbols in slots 3 to 6 in one TDD configuration period are configured with UL subband, the indication is {0, 0,..., 1, 1, 1,..., 0, 0, 0}, where "1" corresponds to the indexes of all symbols in slots 3 to 6.

[**0269]** In the above embodiment, the terminal device may receive the fifth indication information, and the fifth indication information indicates an index of frequency domain transmission direction combination of each SBFD symbol.

As illustrated in FIG. 10, the DL portions of slots 3 to 4 are RB0-RB49, the unavailable portions (or to-be-determined/-flexible/guard portions) of slots 3 to 4 are RB50-59, the UL portions of slots 3 to 4 are RB60-RB99, the DL portions of slots 5 to 6 are RB0-RB49, the unavailable portions of slots 5 to 6 are RB40-59, and the UL portions of slots 5 to 6 are RB60-RB99. Thus the second information is {3, 3, 3,..., 2, 2,...}.

[**0270]** Thereafter, the terminal device may transmit data according to the transmission direction configuration in the frequency domain. For example, the terminal may send data on the UL Subband, and may receive data on a resource other than the UL Subband and the guard bandwidth.

[**0271]** In the above solution 2.1, the frequency domain resources of respective SBFD symbols are configured separately, and the flexibility of the frequency domain resource configuration can be improved.

[**0272]** Method 2.2: The frequency domain resources are configured for each symbol in a period. Any one method in method 1 may be used for the configuration of frequency domain resources.

[**0273]** For example, in one embodiment, the terminal device receives the fifth indication information, and the fifth indication information indicates an index of frequency domain transmission direction combination of each symbol. As illustrated in FIG. 10, the DL portions of slots 3 to 4 are RB0-RB49, the unavailable portions of slots 3 to 4 are RB50-59, and the UL portions of slots 3 to 4 are RB60-RB99. The DL portions of slots 5 to 6 are RB0-RB49, the unavailable portions of slots 5 to 6 are RB40-59, and the UL portions of slots 5 to 6 are RB60-RB99. The first information is {0, 0, 0,..., 3, 3, 3,..., 2, 2,..., 4, 4, 4}. In the present embodiment, the combination of configurations corresponding to the index needs to include options of a full UL frequency band and a full DL frequency band.

[**0274]** Thereafter, the terminal device may transmit data according to the transmission direction configuration in the frequency domain. For example, the terminal may send data on the UL Subband, and may receive data on a resource other than the UL Subband and the guard bandwidth.

[**0275]** In the above solution 2.2, the frequency domain resources of respective symbols are configured separately, and the flexibility of the frequency domain resource configuration can be improved.

[**0276]** Method 2.3: The configuration for the UL portion is applied to all SBFD symbols. For specific methods, the reference is made to the method 1. The unavailable bandwidth is configured for each SBFD symbol in a period, and the method for configuring the unavailable bandwidth of each symbol refers to the method 1.

[**0277]** For example, in one embodiment, the terminal device receives a time domain indication parameter, and the time domain indication parameter is used to indicate symbol(s) or slot(s) including an UL portion. For example, the time domain indication parameter indicates, through a bitmap, that each symbol in a TDD configuration period includes an UL portion. FIG. 10 illustrates a schematic diagram of resource configuration according to an embodiment of the present disclosure. As illustrated in FIG. 10, all symbols in slots 3 to 6 in one TDD configuration period are configured with UL subband, the indication is {0, 0,..., 1, 1, 1,..., 0, 0, 0}, where "1" corresponds to the indexes of all symbols in slots 3 to 6.

[**0278]** In the above embodiment, the terminal device may receive the first indication information, and the first indication information is used to indicate a location of the UL portion in the frequency domain. Specifically, for example, the location of the UL portion refers to a starting point of the UL portion and a bandwidth configuration. For example, the starting resource block S and the width (the number L of RBs) of the UL portion are indicated through a manner of SLIV. The reference of RB index is made to the CRB. As illustrated in FIG. 10, on a carrier with a bandwidth of 100 RB, the starting RB of the UL portion is 60 and the number of RBs is 99, then SLIV = 3960, and the first information ULsubband location = 3960.

[**0279]** In the above embodiment, the terminal device may receive the second indication information, and second indication information is used for indicating an unavailable bandwidth of each SBFD symbol. For example, the second information Guardband = {10, 10, 20, 20}.

[**0280]** Thereafter, the terminal device may transmit data according to the transmission direction configuration in the frequency domain. For example, the terminal may send data on the UL Subband, and may receive data on a resource other than the UL Subband and the guard bandwidth.

[**0281]** In the above solution 2.3, the UL frequency domain resources of respective SBFD symbols are uniformly configured, and the guard widths of respective SBFD symbols are independently configured, which takes into account the occupation of signaling resources and the flexibility of configuration of the frequency domain resource.

[**0282]** Method 2.4: The configuration for the UL portion is applied to all SBFD symbols. For specific methods, the reference is made to the method 1. The DL portion location/bandwidth is configured for each SBFD symbol in a period, and the method for configuring the DL portion location/bandwidth of each symbol refers to the method 1.

[**0283]** For example, in one embodiment, the terminal device receives a time domain indication parameter, and the time domain indication parameter is used to indicate symbol(s) or slot(s) including an UL portion. For example, the time domain indication parameter indicates, through a bitmap, that each symbol in a TDD configuration period includes an UL portion. FIG. 10 illustrates a schematic diagram of resource configuration according to an embodiment of the present disclosure. As illustrated in FIG. 10, all symbols in slots 3 to 6 in one TDD configuration period are configured with UL subband, the indication is {0, 0,..., 1, 1, 1,..., 0, 0, 0}, where "1" corresponds to the indexes of all symbols in slots 3 to 6.

[**0284]** In the above embodiment, the terminal device may receive the first indication information, and the first indication information is used to indicate a location of the UL portion in the frequency domain. Specifically, for example, the location of the UL portion refers to a starting point of the UL portion and a bandwidth configuration. For example, the starting resource block S and the width (the number L of RBs) of the UL portion are indicated through a manner of SLIV. The reference of RB index is made to the CRB. As illustrated in FIG. 10, on a carrier with a bandwidth of 100 RB, the starting RB of the UL portion is 60 and the number of RBs is 99, then SLIV = 3960, and the first information ULsubband location = 3960.

[**0285]** In the above embodiment, the terminal device may receive the third indication information, and the third indication information is used for indicating a DL bandwidth of each SBFD symbol. For example, the second information DL subband = {50, 50, 40, 40}.

[**0286]** Thereafter, the terminal device may transmit data according to the transmission direction configuration in the frequency domain. For example, the terminal may send data on the UL Subband, and may receive data on a resource other than the UL Subband and the guard bandwidth.

[**0287]** In the above solution 2.4, the UL frequency domain resources of respective SBFD symbols are uniformly configured, and the DL portions of respective SBFD symbols are independently configured, which takes into account the occupation of signaling resources and the flexibility of configuration of the frequency domain resource.

[**0288]** Method 3: A configuration for frequency domain resources of each SBFD slot is independent.

[**0289]** Method 3.1: The frequency domain resources are configured for each SBFD slot in a period. Any one method in method 1 may be used for the configuration of frequency domain resources.

[**0290]** For example, in one embodiment, the terminal device receives a time domain indication parameter, and the time domain indication parameter is used to indicate a slot including an UL portion. For example, the time domain indication parameter information indicates, through a bitmap, slot(s) in a TDD configuration period, including an UL portion. As illustrated in FIG. 10, all symbols in slots 3 to 6 in a TDD configuration period are configured with UL subband, the indication is {O, 0,..., 1, 1, 1,..., 0, 0, 0}.

[**0291]** In the above embodiment, the terminal device may receive the fifth indication information, and the fifth indication information indicates an index of frequency domain transmission direction combination of each SBFD slot. As illustrated in FIG. 10, the DL portions of slots 3 to 4 are RB0-RB49, the unavailable portions of slots 3 to 4 are RB50-59, the UL portions of slots 3 to 4 are RB60-RB99, the DL portions of slots 5 to 6 are RB0-RB49, the unavailable portions of slots 5 to 6 are RB40-59, and the UL portions of slots 5 to 6 are RB60-RB99. Thus the fifth indication information is {3, 3, 2, 2}.

[**0292]** Thereafter, the terminal device may transmit data according to the transmission direction configuration in the frequency domain. For example, the terminal may send data on the UL Subband, and may receive data on a resource other than the UL Subband and the guard bandwidth.

[**0293]** In the above solution 3.1, the frequency domain resources of respective SBFD slots are independently configured, thereby providing the resource configuration with larger granularity, and reducing the occupation of signaling resources.

[**0294]** In operation 702, the terminal device determines the configured transmission directions of respective frequency domain resources on at least one time domain resource unit according to the resource configuration information.

[**0295]** In some embodiments, after receiving the resource configuration information, the terminal device may determine the respective transmission direction of each frequency domain resource units on at least one time domain resource unit in respective configuration periods according to the resource configuration information, so as to be used in subsequent scheduling transmission.

[**0296]** In operation 703, data transmission is performed between the terminal device and the network device according to the transmission direction configuration of the frequency domain resources on the at least one time domain resource unit.

[**0297]** In some embodiments, after receiving the scheduling information from the network device, the terminal device may select an actually used time-frequency resource for transmission in combination with the transmission directions of the scheduling resources and the respective transmission direction of each frequency-domain resource unit on at least one time-domain resource unit determined according to the resource configuration information.

[**0298]** In some embodiments, for the terminal device, the configuration and transmission process mainly includes the following two operations.

[**0299]** 1) The terminal receives the first indication information, and the first indication information is used for indicating at least the transmission direction configuration of the UL portion in the frequency domain.

[**0300]** Further, the terminal may receive the fourth indication information, and the fourth indication information indicates time domain information corresponding to the transmission direction configuration in the frequency domain, for example, symbol information and/or slot information.

[**0301]** Further, the terminal may receive the third indication information, and the third indication information is used for indicating at least the transmission direction configuration of the DL portion in the frequency domain. Alternatively, the terminal may receive the second indication information, and the second indication information is used for indicating at least an unavailable portion configuration in the frequency domain.

[**0302]** The first indication information, the second indication information, the third indication information, and/or the fourth indication information may be configured by higher layer signaling, such as RRC or MAC CE, or may be indicated by DCI.

[**0303]** Further, the transmission direction configuration in the frequency domain at least includes the configuration for the UL portion, further includes at least one configuration of the DL portion or the unavailable portion.

[**0304]** Further, the indication granularity of the transmission direction configuration in the frequency domain may be RB, RBG, or subband.

[**0305]** 2) The terminal transmits data according to the transmission direction configuration in the frequency domain.

[**0306]** In summary, according to the solution for the resource configuration shown in the embodiments of the present disclosure, in a scenario in which an UL frequency domain resource and a non-UL frequency domain resource that have the same time domain are allowed to be configured on the same time domain resource unit, the terminal device receives resource configuration information for indicating resource location(s) of an UL frequency domain resource and/or a non-UL frequency domain resource on at least one time domain resource unit, thereby enabling the terminal to determine a time-frequency two-dimensional configuration in an XDD transmission scenario, avoiding a conflict between UL transmission and non-UL transmission in the XDD transmission scenario, and improving transmission efficiency of a wireless communication system.

[**0307]** FIG. 11 illustrates a block diagram of a wireless transmission apparatus according to an embodiment of the present disclosure. The wireless transmission apparatus can implement functions performed by the terminal device in the method illustrated in FIG. 3, FIG. 5, or FIG. 7. As illustrated in FIG. 11, the apparatus may include a receiving module 1101.

[**0308]** The receiving module 1101 is configured to receive resource configuration information used for indicating resource location(s) of an UL frequency domain resource and/or a non-UL frequency domain resource on at least one time domain resource unit.

[**0309]** The UL frequency domain resource and the non-UL frequency domain resource that have same time domain are allowed to be configured on the time domain resource unit.

[**0310]** In a possible implementation, the resource configuration information includes the first frequency domain resource configuration parameter shared by at least one first time domain resource unit; and/or the resource configuration information includes a respective second frequency domain resource configuration parameter corresponding to each of the at least one first time domain resource unit.

[**0311]** The at least one first time domain resource unit is time domain resource unit(s), configured with an UL frequency domain resource and a non-UL frequency domain resource that have same time domain, among the at least one time domain resource unit, or the at least one first time domain resource unit is all of the at least one time domain resource unit.

[**0312]** In a possible implementation, the first frequency domain resource configuration parameter and the second frequency domain resource configuration parameter include at least one piece of the first indication information, the second indication information, or the third indication information, respectively.

[**0313]** The first indication information is used to indicate the resource location of the UL frequency domain resource.

[**0314]** The second indication information is used to indicate a resource location of the first frequency domain resource. The first frequency domain resource is a resource not available for resource scheduling information, or a transmission direction of the first frequency domain resource is to-be-determined. The first frequency domain resource is a frequency domain resource adjacent to the UL frequency domain resource.

[**0315]** The third indication information is used to indicate a resource location of a DL frequency domain resource.

[**0316]** In a possible implementation, in a case that the resource configuration information includes the first frequency domain resource configuration parameter, the first frequency domain resource configuration parameter includes at least one of the first indication information, the second indication information, or the third indication information.

[**0317]** Alternatively, in a case that the resource configuration information includes the second frequency domain resource configuration parameter, the second frequency domain resource configuration parameter includes at least one of the first indication information, the second indication information, or the third indication information.

[**0318]** Alternatively, in a case that the resource configuration information includes the first frequency domain resource configuration parameter and the second frequency domain resource configuration parameter, the first frequency domain resource configuration parameter includes one or two of the first indication information, the second indication information, and the third indication information, and the second frequency domain resource configuration parameter includes other part or all pieces of indication information, other than the indication information included in the first frequency domain resource, among the first indication information, the second indication information, and the third indication information .

[**0319]** In a possible implementation, the first indication information is used to indicate a reference frequency domain location and a bandwidth of the UL frequency domain resource.

[**0320]** In a possible implementation, the reference frequency domain location of the UL frequency domain resource is a location of a starting frequency domain resource unit of the UL frequency domain resource, or the reference frequency domain location of the UL frequency domain resource is a location of a middle frequency domain resource unit of the UL frequency domain resource.

[**0321]** The bandwidth of the UL frequency domain resource is the number of frequency domain resource units of the UL frequency domain resource.

[**0322]** In a possible implementation, in a case that the reference frequency domain location of the UL frequency domain resource is the location of the starting frequency domain resource unit of the UL frequency domain resource, the first indication information is used to indicate, through a manner of SLIV, the location of the starting frequency domain resource unit of the UL frequency domain resource and the number of frequency domain resource units of the UL frequency domain resource.

[**0323]** In a possible implementation, the second indication information is used to indicate a bandwidth value of the first frequency domain resource.

[**0324]** In a possible implementation, the second indication information is used to indicate a single guard bandwidth value. The single guard bandwidth value is used to indicate a bandwidth of at least two first frequency domain resources that have same bandwidth.

[**0325]** Alternatively, the second indication information is used to indicate a single guard bandwidth value. The single guard bandwidth value is used to indicate a bandwidth of a single first frequency domain resource.

[**0326]** Alternatively, the second indication information is used to indicate at least two guard bandwidth values. The at least two guard bandwidth values are used to indicate bandwidths of at least two first frequency domain resources, respectively.

[**0327]** In a possible implementation, the resource location of the DL frequency domain resource is determined by the resource location of the UL frequency domain resource and the resource location of the first frequency domain resource in the following cases.

[**0328]** The resource configuration information includes the first frequency domain resource configuration parameter, and the first frequency domain resource configuration parameter includes the first indication information and the second indication information.

[**0329]** Alternatively, the resource configuration information includes the second frequency domain resource configuration parameter, and the second frequency domain resource configuration parameter includes the first indication information and the second indication information.

[**0330]** Alternatively, the resource configuration information includes the first frequency domain resource configuration parameter and the second frequency domain resource configuration parameter, the first frequency domain resource parameter includes the first indication information, and the second frequency domain resource parameter includes the second indication information.

[**0331]** Alternatively, the resource configuration information includes the first frequency domain resource configuration parameter and the second frequency domain resource configuration parameter, the first frequency domain resource parameter includes the second indication information, and the second frequency domain resource parameter includes the first indication information.

[**0332]** In a possible implementation, the third indication information includes the first DL indication information for indicating a reference frequency domain location and a bandwidth of the DL frequency domain resource.

[**0333]** In a possible implementation, the first DL indication information includes a single DL frequency domain resource indication value, and the single DL frequency domain resource indication value is used to indicate a reference frequency domain location and a bandwidth of any one of two DL frequency domain resources.

[**0334]** The two DL frequency domain resources are symmetrically distributed around the UL frequency domain resource.

[**0335]** In a possible implementation, the first DL indication information includes at least one DL frequency domain resource indication value, and the at least one DL frequency domain resource indication value is used to indicate a reference frequency domain location and a bandwidth of at least one DL frequency domain resource, respectively.

[**0336]** In a possible implementation, the reference frequency domain location of the DL frequency domain resource is a location of a starting frequency domain resource unit of the DL frequency domain resource, or the reference frequency domain location of the DL frequency domain resource is a location of a middle frequency domain resource unit of the DL frequency domain resource.

[**0337]** The bandwidth of the DL frequency domain resource is the number of frequency domain resource units of the DL frequency domain resource.

[**0338]** In a possible implementation, in a case that the reference frequency domain location of the DL frequency domain resource is the location of the starting frequency domain resource unit of the DL frequency domain resource, the DL frequency domain resource indication value is used to indicate, through a manner of SLIV, the location of the starting frequency domain resource unit of the DL frequency domain resource and the number of frequency domain resource units of the DL frequency domain resource.

[**0339]** In one possible implementation, the resource location of the first frequency domain resource is determined by the resource location of the UL frequency domain resource and the resource location of the DL frequency domain resource in the following cases.

[**0340]** The resource configuration information includes the first frequency domain resource configuration parameter shared by the at least one first time domain resource unit, and the first frequency domain resource configuration parameter includes the first indication information and the third indication information.

[**0341]** Alternatively, the resource configuration information includes the respective second frequency domain resource configuration parameter corresponding to each of the at least one first time domain resource unit, and the second frequency domain resource configuration parameter includes the first indication information and the third indication information.

[**0342]** Alternatively, the resource configuration information includes the first frequency domain resource configuration parameter shared by the at least one first time domain resource unit and the respective second frequency domain resource configuration parameter corresponding to each of the at least one first time domain resource unit, the first frequency domain resource parameter includes the first indication information, and the second frequency domain resource parameter includes the third indication information.

[**0343]** Alternatively, the resource configuration information includes the first frequency domain resource configuration parameter shared by the at least one first time domain resource unit and the respective second frequency domain resource configuration parameter corresponding to each of the at least one first time domain resource unit, the first frequency domain resource parameter includes the third indication information, and the second frequency domain resource parameter includes the first indication information.

[**0344]** In a possible implementation, the third indication information includes the second DL indication information for indicating a bandwidth of the DL frequency domain resource.

[**0345]** In a possible implementation, the resource location of the first frequency domain resource is determined by the resource location of the UL frequency domain resource and the bandwidth of the DL frequency domain resource in the following cases.

[**0346]** The resource configuration information includes the first frequency domain resource configuration parameter shared by the at least one first time domain resource unit, and the first frequency domain resource configuration parameter includes the first indication information and the third indication information.

[**0347]** Alternatively, the resource configuration information includes the respective second frequency domain resource configuration parameter corresponding to each of the at least one first time domain resource unit, and the second frequency domain resource configuration parameter includes the first indication information and the third indication information.

[**0348]** Alternatively, the resource configuration information includes the first frequency domain resource configuration parameter shared by the at least one first time domain resource unit and the respective second frequency domain resource configuration parameter corresponding to each of the at least one first time domain resource unit, the first frequency domain resource parameter includes the first indication information, and the second frequency domain resource parameter includes the third indication information.

[**0349]** Alternatively, the resource configuration information includes the first frequency domain resource configuration parameter shared by the at least one first time domain resource unit and the respective second frequency domain resource configuration parameter corresponding to each of the at least one first time domain resource unit, the first frequency domain resource parameter includes the third indication information, and the second frequency domain resource parameter includes the first indication information.

[**0350]** In a possible implementation, the second DL indication information is used to indicate a total bandwidth of DL frequency domain resource(s) on a carrier.

[**0351]** Alternatively, the second DL indication information is used to indicate a respective bandwidth of each of at least two DL frequency domain resources on the carrier.

[**0352]** In a possible implementation, in a case that the carrier includes two first frequency domain resources, and the two first frequency domain resources are symmetrically distributed around the UL frequency domain resource, a bandwidth of any one first frequency domain resource is the first bandwidth. The first bandwidth is (carrier bandwidth - bandwidth of the UL frequency domain resource - total bandwidth of the DL frequency domain resource(s) on the carrier) / 2.

[**0353]** In a case that the carrier includes a single first frequency domain resource, a bandwidth of the first frequency domain resource is the second bandwidth. The second bandwidth is (carrier bandwidth - bandwidth of the UL frequency domain resource - total bandwidth of the DL frequency domain resource(s) on the carrier).

[**0354]** In a possible implementation, in a case that the resource configuration information includes the first frequency domain resource configuration parameter, the first frequency domain resource configuration parameter includes the fourth indication information. Alternatively, in a case that the resource configuration information includes the second frequency domain resource configuration parameter, the second frequency domain resource configuration parameter includes the fourth indication information.

[**0355]** The fourth indication information is used to indicate, through a manner of bitmap, a respective transmission direction of each frequency domain resource unit in a carrier, and the transmission direction includes UL, DL or other.

[**0356]** In a possible implementation, in a case that the resource configuration information includes the first frequency domain resource configuration parameter, the first frequency domain resource configuration parameter includes the fifth indication information. Alternatively, in a case that the resource configuration information includes the second frequency domain resource configuration parameter, the second frequency domain resource configuration parameter includes the fifth indication information.

[**0357]** The fifth indication information is used to indicate an index corresponding to a first combination, the first combination is a combination of respective transmission directions of frequency domain resource units in a carrier, and the transmission directions include UL, DL, and other.

[**0358]** Alternatively, the fifth indication information is used to indicate an index corresponding to the second combination, the second combination is a location combination of frequency domain resource units in specified transmission direction(s) in the carrier, and the specified transmission direction(s) include(s) at least one of UL, UL, or other.

[**0359]** In a possible implementation, the transmission direction of the frequency domain resource unit being other indicates that the transmission direction of the frequency domain resource unit is to-be-determined, or indicates that the frequency domain resource unit is not available for resource scheduling information.

[**0360]** In a possible implementation, the frequency domain resource unit is a RB, a RB group, or a subband.

[**0361]** In a possible implementation, the resource configuration information further includes a time domain indication parameter.

[**0362]** The time domain indication parameter is used to indicate a time domain location of a time domain resource unit configured with an UL frequency domain resource and a non-UL frequency domain resource that have same time domain.

[**0363]** In a possible implementation, the time domain indication parameter is used to indicate, through a manner of bitmap, whether each time domain resource unit in a configuration period is configured with an UL frequency domain resource and a non-UL frequency domain resource that have the same time domain.

[**0364]** Alternatively, the time domain indication parameter is used to indicate, through a manner of bitmap, whether each DL time domain resource unit and/or flexible time domain resource unit in the configuration period is configured with the UL frequency domain resource and the non-UL frequency domain resource that have the same time domain.

[**0365]** In a possible implementation, the time domain resource unit is a slot, a subslot or a symbol.

[**0366]** In a possible implementation, the apparatus further incudes a processing module 1102.

[**0367]** The processing module 1102 is configured to determine a time-frequency resource for UL transmission and/or non-UL transmission according to the resource configuration information.

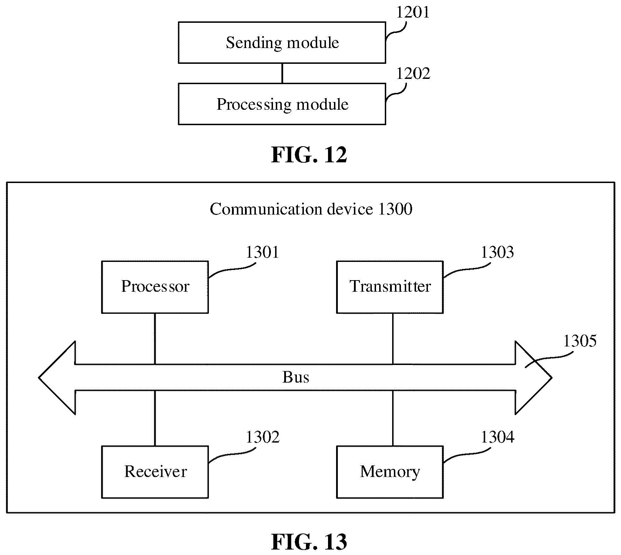

[**0368]** FIG. 12 illustrates a block diagram of a wireless transmission apparatus according to an embodiment of the present disclosure. The wireless transmission apparatus can implement a function performed by a network device in the method illustrated in FIG. 3, FIG. 5, or FIG. 7. As illustrated in FIG. 12, the apparatus may include a sending module 1201.

[**0369]** The sending module 1201 is configured to send resource configuration information to a terminal device. The resource configuration information is used for indicating resource location(s) of an UL frequency domain resource and/or a non-UL frequency domain resource on at least one time domain resource unit.

[**0370]** The UL frequency domain resource and the non-UL frequency domain resource that have same time domain are allowed to be configured on the time domain resource unit.

[**0371]** In a possible implementation, the resource configuration information includes the first frequency domain resource configuration parameter shared by at least one first time domain resource unit; and/or the resource configuration information includes a respective second frequency domain resource configuration parameter corresponding to each of the at least one first time domain resource unit. The at least one first time domain resource unit is time domain resource unit(s),configured with an UL frequency domain resource and a non-UL frequency domain resource that have same time domain, among the at least one time domain resource unit, or the at least one first time domain resource unit is all of the at least one time domain resource unit.

[**0372]** In a possible implementation, the first frequency domain resource configuration parameter and the second frequency domain resource configuration parameter include at least one piece of the first indication information, the second indication information, or the third indication information, respectively.

[**0373]** The first indication information is used to indicate the resource location of the UL frequency domain resource.

[**0374]** The second indication information is used to indicate a resource location of the first frequency domain resource. The first frequency domain resource is a resource not available for resource scheduling information, or a transmission direction of the first frequency domain resource is to-be-determined. The first frequency domain resource is a frequency domain resource adjacent to the UL frequency domain resource.

[**0375]** The third indication information is used to indicate a resource location of a DL frequency domain resource.

[**0376]** In a possible implementation, in a case that the resource configuration information includes the first frequency domain resource configuration parameter, the first frequency domain resource configuration parameter includes at least one of the first indication information, the second indication information, or the third indication information.

[**0377]** Alternatively, in a case that the resource configuration information includes the second frequency domain resource configuration parameter, the second frequency domain resource configuration parameter includes at least one of the first indication information, the second indication information, or the third indication information.

[**0378]** Alternatively, in a case that the resource configuration information includes the first frequency domain resource configuration parameter and the second frequency domain resource configuration parameter, the first frequency domain resource configuration parameter includes one or two of the first indication information, the second indication information, and the third indication information, and the second frequency domain resource configuration parameter includes other part or all pieces of indication information, other than the indication information included in the first frequency domain resource, among the first indication information, the second indication information, and the third indication information.

[**0379]** In a possible implementation, the first indication information is used to indicate a reference frequency domain location and a bandwidth of the UL frequency domain resource.

[**0380]** In a possible implementation, the reference frequency domain location of the UL frequency domain resource is a location of a starting frequency domain resource unit of the UL frequency domain resource, or the reference frequency domain location of the UL frequency domain resource is a location of a middle frequency domain resource unit of the UL frequency domain resource.

[**0381]** The bandwidth of the UL frequency domain resource is a number of frequency domain resource units of the UL frequency domain resource.

[**0382]** In a possible implementation, in a case that the reference frequency domain location of the UL frequency domain resource is the location of the starting frequency domain resource unit of the UL frequency domain resource, the first indication information is used to indicate, through a manner of SLIV, the location of the starting frequency domain resource unit of the UL frequency domain resource and the number of frequency domain resource units of the UL frequency domain resource.

[**0383]** In a possible implementation, the second indication information is used to indicate a bandwidth value of the first frequency domain resource.

[**0384]** In a possible implementation, the second indication information is used to indicate a single guard bandwidth value. The single guard bandwidth value is used to indicate a bandwidth of at least two first frequency domain resources that have same bandwidth.

[**0385]** Alternatively, the second indication information is used to indicate a single guard bandwidth value. The single guard bandwidth value is used to indicate a bandwidth of a single first frequency domain resource.

[**0386]** Alternatively, the second indication information is used to indicate at least two guard bandwidth values. The at least two guard bandwidth values are used to indicate bandwidths of at least two first frequency domain resources, respectively.

[**0387]** In a possible implementation, the resource location of the DL frequency domain resource is determined by the resource location of the UL frequency domain resource and the resource location of the first frequency domain resource in the following cases.

[**0388]** The resource configuration information includes the first frequency domain resource configuration parameter, and the first frequency domain resource configuration parameter includes the first indication information and the second indication information.

[**0389]** Alternatively, the resource configuration information includes the second frequency domain resource configuration parameter, and the second frequency domain resource configuration parameter includes the first indication information and the second indication information.

[**0390]** Alternatively, the resource configuration information includes the first frequency domain resource configuration parameter and the second frequency domain resource configuration parameter, the first frequency domain resource parameter includes the first indication information, and the second frequency domain resource parameter includes the second indication information.

[**0391]** Alternatively, the resource configuration information includes the first frequency domain resource configuration parameter and the second frequency domain resource configuration parameter, the first frequency domain resource parameter includes the second indication information, and the second frequency domain resource parameter includes the first indication information.

[**0392]** In a possible implementation, the third indication information includes the first DL indication information for indicating a reference frequency domain location and a bandwidth of the DL frequency domain resource.

[**0393]** In a possible implementation, the first DL indication information includes a single DL frequency domain resource indication value, and the single DL frequency domain resource indication value is used to indicate a reference frequency domain location and a bandwidth of any one of two DL frequency domain resources.

[**0394]** The two DL frequency domain resources are symmetrically distributed around the UL frequency domain resource.

[**0395]** In a possible implementation, the first DL indication information includes at least one DL frequency domain resource indication value, and the at least one DL frequency domain resource indication value is used to indicate a reference frequency domain location and a bandwidth of at least one DL frequency domain resource, respectively.

[**0396]** In a possible implementation, the reference frequency domain location of the DL frequency domain resource is a location of a starting frequency domain resource unit of the DL frequency domain resource, or the reference frequency domain location of the DL frequency domain resource is a location of a middle frequency domain resource unit of the DL frequency domain resource.

[**0397]** The bandwidth of the DL frequency domain resource is the number of frequency domain resource units of the DL frequency domain resource.

[**0398]** In a possible implementation, in a case that the reference frequency domain location of the DL frequency domain resource is the location of the starting frequency domain resource unit of the DL frequency domain resource, the DL frequency domain resource indication value is used to indicate, through a manner of SLIV, the location of the starting frequency domain resource unit of the DL frequency domain resource and the number of frequency domain resource units of the DL frequency domain resource.

[**0399]** In a possible implementation, the resource location of the first frequency domain resource is determined by the resource location of the UL frequency domain resource and the resource location of the DL frequency domain resource in the following cases.

[**0400]** The resource configuration information includes the first frequency domain resource configuration parameter shared by the at least one first time domain resource unit, and the first frequency domain resource configuration parameter includes the first indication information and the third indication information.

[**0401]** Alternatively, the resource configuration information includes the respective second frequency domain resource configuration parameter corresponding to each of the at least one first time domain resource unit, and the second frequency domain resource configuration parameter includes the first indication information and the third indication information.

[**0402]** Alternatively, the resource configuration information includes the first frequency domain resource configuration parameter shared by the at least one first time domain resource unit and the respective second frequency domain resource configuration parameter corresponding to each of the at least one first time domain resource unit, the first frequency domain resource parameter includes the first indication information, and the second frequency domain resource parameter includes the third indication information.

[**0403]** Alternatively, the resource configuration information includes the first frequency domain resource configuration parameter shared by the at least one first time domain resource unit and the respective second frequency domain resource configuration parameter corresponding to each of the at least one first time domain resource unit, the first frequency domain resource parameter includes the third indication information, and the second frequency domain resource parameter includes the first indication information.

[**0404]** In a possible implementation, the third indication information includes the second DL indication information for indicating a bandwidth of the DL frequency domain resource.

[**0405]** In a possible implementation, the resource location of the first frequency domain resource is determined by the resource location of the UL frequency domain resource and the bandwidth of the DL frequency domain resource in the following cases.

[**0406]** The resource configuration information includes the first frequency domain resource configuration parameter shared by the at least one first time domain resource unit, and the first frequency domain resource configuration parameter includes the first indication information and the third indication information.

[**0407]** Alternatively, the resource configuration information includes the respective second frequency domain resource configuration parameter corresponding to each of the at least one first time domain resource unit, and the second frequency domain resource configuration parameter includes the first indication information and the third indication information.

[**0408]** Alternatively, the resource configuration information includes the first frequency domain resource configuration parameter shared by the at least one first time domain resource unit and the respective second frequency domain resource configuration parameter corresponding to each of the at least one first time domain resource unit, the first frequency domain resource parameter includes the first indication information, and the second frequency domain resource parameter includes the third indication information.

[**0409]** Alternatively, the resource configuration information includes the first frequency domain resource configuration parameter shared by the at least one first time domain resource unit and the respective second frequency domain resource configuration parameter corresponding to each of the at least one first time domain resource unit, the first frequency domain resource parameter includes the third indication information, and the second frequency domain resource parameter includes the first indication information.

[**0410]** In a possible implementation, the second DL indication information is used to indicate a total bandwidth of DL frequency domain resource(s) on a carrier.

[**0411]** Alternatively, the second DL indication information is used to indicate a respective bandwidth of each of at least two DL frequency domain resources on the carrier.

[**0412]** In a possible implementation, in a case that the carrier includes two first frequency domain resources, and the two first frequency domain resources are symmetrically distributed around the UL frequency domain resource, a bandwidth of any one first frequency domain resource is the first bandwidth. The first bandwidth is (carrier bandwidth - bandwidth of the UL frequency domain resource - total bandwidth of the DL frequency domain resource(s) on the carrier) / 2.

[**0413]** In a case that the carrier includes a single first frequency domain resource, a bandwidth of the first frequency domain resource is the second bandwidth. The second bandwidth is (carrier bandwidth - bandwidth of the UL frequency domain resource - total bandwidth of the DL frequency domain resource(s) on the carrier).

[**0414]** In a possible implementation, in a case that the resource configuration information includes the first frequency domain resource configuration parameter, the first frequency domain resource configuration parameter includes the fourth indication information. Alternatively, in a case that the resource configuration information includes the second frequency domain resource configuration parameter, the second frequency domain resource configuration parameter includes the fourth indication information.

[**0415]** The fourth indication information is used to indicate, through a manner of bitmap, a respective transmission direction of each frequency domain resource unit in a carrier, and the respective transmission direction includes UL, DL or other.

[**0416]** In a possible implementation, in a case that the resource configuration information includes the first frequency domain resource configuration parameter, the first frequency domain resource configuration parameter includes the fifth indication information. Alternatively, in a case that the resource configuration information includes the second frequency domain resource configuration parameter, the second frequency domain resource configuration parameter includes the fifth indication information.

[**0417]** The fifth indication information is used to indicate an index corresponding to the first combination, the first combination is a combination of respective transmission directions of frequency domain resource units in a carrier, and the transmission directions include UL, DL and other.

[**0418]** Alternatively, the fifth indication information is used to indicate an index corresponding to the second combination, the second combination is a location combination of frequency domain resource units in specified transmission direction(s) in the carrier, and the specified transmission direction(s) include(s) at least one of UL, UL, or other.

[**0419]** In a possible implementation, the transmission direction of the frequency domain resource unit being other indicates that the transmission direction of the frequency domain resource unit is to-be-determined, or indicates that the frequency domain resource unit is not available for resource scheduling information.

[**0420]** In a possible implementation, the frequency domain resource unit is a RB, a RB group, or a subband.

[**0421]** In a possible implementation, the resource configuration information further includes a time domain indication parameter. The time domain indication parameter is used to indicate a time domain location of a time domain resource unit configured with an UL frequency domain resource and a non-UL frequency domain resource that have same time domain.

[**0422]** In a possible implementation, the time domain indication parameter is used to indicate, through a manner of bitmap, whether each time domain resource unit in a configuration period is configured with an UL frequency domain resource and a non-UL frequency domain resource that have the same time domain.

[**0423]** Alternatively, the time domain indication parameter is used to indicate, through a manner of bitmap, whether each DL time domain resource unit and/or flexible time domain resource unit in the configuration period is configured with the UL frequency domain resource and the non-UL frequency domain resource that have the same time domain.

[**0424]** In a possible implementation, the time domain resource unit is a slot, a subslot or a symbol.

[**0425]** In a possible implementation, the apparatus further includes a processing module 1202. The processing module 1202 is configured to generate the resource configuration information.

[**0426]** It should be noted that when the apparatus provided in the above embodiment realizes its functions, the division of respective functional modules described above is only illustrated as an example. In the practical application, the functions described above may be implemented by different functional modules according to actual needs, that is, the content structure of the apparatus may be divided into different functional modules to complete all or part of the functions described above.

[**0427]** With regard to the apparatus in the above embodiments, the specific manner in which the respective modules perform operations has been described in detail in the embodiments related to the method, which will not be described in detail here.

[**0428]** FIG. 13 illustrates a schematic structural diagram of a communication device 1300 according to an embodiment of the present disclosure. The communication device 1300 may include a processor 1301, a receiver 1302, a transmitter 1303, a memory 1304, and a bus 1305.

[**0429]** The processor 1301 includes one or more processing cores, and performs various functional applications and information processing by running software programs and modules.

[**0430]** The receiver 1302 and the transmitter 1303 may be implemented as a communication component, which may be a communication chip. The communication chip may also be referred to as a transceiver. The memory 1304 is connected to the processor 1301 via a bus 1305. The memory 1304 may be used to store a computer program that the processor 1301 is used to execute to implement the various operations in the method embodiments described above.

[**0431]** Further, the memory 1304 may be implemented by any type of volatile or nonvolatile storage device, including, but not limited to, magnetic or optical disk, electrically erasable programmable read-only memory, erasable programmable read-only memory, static ready-to-access memory, read-only memory, magnetic memory, flash memory, programmable read-only memory, or a combination thereof.

[**0432]** In an exemplary solution, when the communication device 1300 is implemented as the terminal device described above, the receiver 1302 and the processor 1301 execute the computer program so that the communication device implements the respective operations performed by the terminal device in the methods illustrated in any one of FIG. 3, FIG. 5, or FIG. 7. In this case, the above receiver 1302 may correspondingly implement the methods and operations implemented by the receiving module 1101 in FIG. 11, and the processor 1301 may correspondingly implement the methods and operations implemented by the processing module 1102 in FIG. 11.

[**0433]** In an exemplary aspect, when the communication device 1300 is implemented as the network device described above, the transmitter 1303 and the processor 1301 execute the computer program so that the communication device implements the various operations performed by the network device in the methods illustrated in any one of FIG. 3, FIG. 5, or FIG. 7. In this case, the above transmitter 1303 may correspondingly implement the methods and operations implemented by the sending module 1201 in FIG. 12, and the processor 1301 may correspondingly implement the methods and operations implemented by the processing module 1202 in FIG. 12.

[**0434]** The embodiments of the present disclosure further provides a computer readable storage medium, in which a computer program is stored, and the computer program is loaded and executed by a processor to implement all or part of the operations performed by the terminal device or the network device in the methods illustrated in FIG. 3, FIG. 5, or FIG. 7 described above.

[**0435]** The present disclosure further provides a chip for running in a communication device to cause the communication device to perform all or part of the operations performed by the terminal device or the network device in the methods illustrated in FIG. 3, FIG. 5 or FIG. 7 described above.

[**0436]** The present disclosure further provides a computer program product, and the computer program product or computer program includes computer instructions stored in a computer readable storage medium. The processor of the communication device reads the computer instructions from the computer readable storage medium, and the processor executes the computer instructions, so that the communication device performs all or part of the operations performed by the terminal device or the network device in the methods illustrated in FIG. 3, FIG. 5 or FIG. 7 described above.

[**0437]** The present disclosure further provides a computer program executed by a processor of a communication device to implement all or part of the operations performed by the terminal device or the network device in the methods illustrated in FIG. 3, FIG. 5, or FIG. 7 described above.

[**0438]** Those skilled in the art should recognize that in one or more of the examples described above, the functions described in the embodiments of the present disclosure may be implemented in hardware, software, firmware, or any combination thereof. When implemented using software, these functions may be stored in a computer readable medium or transmitted as one or more instructions or codes in a computer readable medium. The computer readable medium includes a computer storage medium and a communication medium. The communication medium includes any medium that facilitates transfer of a computer program from one place to another. The storage medium may be any available medium accessible by a general-purpose or special-purpose computer.

[**0439]** The above description is only exemplary embodiments of the present disclosure, and is not intended to limit the present disclosure. Any modification, equivalent substitution, improvement, etc. made within the spirit and principles of the present disclosure should be included within the scope of protection of the present disclosure.

## Claims

1. A wireless transmission method, wherein the method is performed by a terminal device, and the method comprises:

   receiving resource configuration information used for indicating resource location(s) of an uplink (UL) frequency domain resource and/or a non-UL frequency domain resource on at least one time domain resource unit, wherein UL frequency domain resource and non-UL frequency domain resource that have same time domain are allowed to be configured on the time domain resource unit.

2. The method of claim 1, wherein,

   the resource configuration information comprises a first frequency domain resource configuration parameter shared by at least one first time domain resource unit; and/or the resource configuration information comprises a respective second frequency domain resource configuration parameter corresponding to each of the at least one first time domain resource unit,
   wherein the at least one first time domain resource unit is time domain resource unit(s), configured with an UL frequency domain resource and a non-UL frequency domain resource that have same time domain, among the at least one time domain resource unit, or the at least one first time domain resource unit is all of the at least one time domain resource unit.

3. The method of claim 2, wherein the first frequency domain resource configuration parameter and the second frequency domain resource configuration parameter comprise at least one piece of first indication information, second indication information, or third indication information, respectively; wherein,

   the first indication information is used to indicate the resource location of the UL frequency domain resource;
   the second indication information is used to indicate a resource location of a first frequency domain resource, wherein the first frequency domain resource is a resource not available for resource scheduling information, or a transmission direction of the first frequency domain resource is to-be-determined, and the first frequency domain resource is a frequency domain resource adjacent to the UL frequency domain resource; and
   the third indication information is used to indicate a resource location of a downlink (DL) frequency domain resource.

4. The method of claim 3, wherein,

   in a case that the resource configuration information comprises the first frequency domain resource configuration parameter, the first frequency domain resource configuration parameter comprises at least one of the first indication information, the second indication information, or the third indication information; or
   in a case that the resource configuration information comprises the second frequency domain resource configuration parameter, the second frequency domain resource configuration parameter comprises at least one of the first indication information, the second indication information, or the third indication information; or
   in a case that the resource configuration information comprises the first frequency domain resource configuration parameter and the second frequency domain resource configuration parameter, the first frequency domain resource configuration parameter comprises one or two of the first indication information, the second indication information, and the third indication information, and the second frequency domain resource configuration parameter comprises other part or all pieces of indication information, other than the indication information comprised in the first frequency domain resource, among the first indication information, the second indication information, and the third indication information.

5. The method of claim 3 or 4, wherein the first indication information is used to indicate a reference frequency domain location and a bandwidth of the UL frequency domain resource.

6. The method of claim 5, wherein the reference frequency domain location of the UL frequency domain resource is a location of a starting frequency domain resource unit of the UL frequency domain resource, or the reference frequency domain location of the UL frequency domain resource is a location of a middle frequency domain resource unit of the UL frequency domain resource; and
   the bandwidth of the UL frequency domain resource is a number of frequency domain resource units of the UL frequency domain resource.

7. The method of claim 6, wherein in a case that the reference frequency domain location of the UL frequency domain resource is the location of the starting frequency domain resource unit of the UL frequency domain resource,
the first indication information is used to indicate, through a manner of Start and Length Indicator (SLIV), the location of the starting frequency domain resource unit of the UL frequency domain resource and the number of frequency domain resource units of the UL frequency domain resource.

8. The method of any one of claims 3 to 7, wherein the second indication information is used to indicate a bandwidth value of the first frequency domain resource.

9. The method of claim 8, wherein,

the second indication information is used to indicate a single guard bandwidth value, wherein the single guard bandwidth value is used to indicate a bandwidth of at least two first frequency domain resources that have same bandwidth; or
the second indication information is used to indicate a single guard bandwidth value, wherein the single guard bandwidth value is used to indicate a bandwidth of a single first frequency domain resource; or
the second indication information is used to indicate at least two guard bandwidth values, wherein the at least two guard bandwidth values are used to indicate bandwidths of at least two first frequency domain resources, respectively.

10. The method of any one of claims 5 to 9, wherein the resource location of the DL frequency domain resource is determined by the resource location of the UL frequency domain resource and the resource location of the first frequency domain resource, in a case that:

the resource configuration information comprises the first frequency domain resource configuration parameter, and the first frequency domain resource configuration parameter comprises the first indication information and the second indication information; or
the resource configuration information comprises the second frequency domain resource configuration parameter, and the second frequency domain resource configuration parameter comprises the first indication information and the second indication information; or
the resource configuration information comprises the first frequency domain resource configuration parameter and the second frequency domain resource configuration parameter, the first frequency domain resource parameter comprises the first indication information, and the second frequency domain resource parameter comprises the second indication information; or
the resource configuration information comprises the first frequency domain resource configuration parameter and the second frequency domain resource configuration parameter, the first frequency domain resource parameter comprises the second indication information, and the second frequency domain resource parameter comprises the first indication information.

11. The method of any one of claims 3 to 7, wherein the third indication information comprises first DL indication information for indicating a reference frequency domain location and a bandwidth of the DL frequency domain resource.

12. The method of claim 11, wherein the first DL indication information comprises a single DL frequency domain resource indication value, and the single DL frequency domain resource indication value is used to indicate a reference frequency domain location and a bandwidth of any one of two DL frequency domain resources,
wherein the two DL frequency domain resources are symmetrically distributed around the UL frequency domain resource.

13. The method of claim 11, wherein the first DL indication information comprises at least one DL frequency domain resource indication value, and the at least one DL frequency domain resource indication value is used to indicate a reference frequency domain location and a bandwidth of at least one DL frequency domain resource, respectively.

14. The method of any one of claims 11 to 13, wherein the reference frequency domain location of the DL frequency domain resource is a location of a starting frequency domain resource unit of the DL frequency domain resource, or the reference frequency domain location of the DL frequency domain resource is a location of a middle frequency domain resource unit of the DL frequency domain resource; and
the bandwidth of the DL frequency domain resource is a number of frequency domain resource units of the DL frequency domain resource.

**15.** The method of claim 14, wherein in a case that the reference frequency domain location of the DL frequency domain resource is the location of the starting frequency domain resource unit of the DL frequency domain resource,
the DL frequency domain resource indication value is used to indicate, through a manner of SLIV, the location of the starting frequency domain resource unit of the DL frequency domain resource and the number of frequency domain resource units of the DL frequency domain resource.

**16.** The method of any one of claims 11 to 15, wherein the resource location of the first frequency domain resource is determined by the resource location of the UL frequency domain resource and the resource location of the DL frequency domain resource, in a case that:

the resource configuration information comprises the first frequency domain resource configuration parameter shared by the at least one first time domain resource unit, and the first frequency domain resource configuration parameter comprises the first indication information and the third indication information; or
the resource configuration information comprises the respective second frequency domain resource configuration parameter corresponding to each of the at least one first time domain resource unit, and the second frequency domain resource configuration parameter comprises the first indication information and the third indication information; or
the resource configuration information comprises the first frequency domain resource configuration parameter shared by the at least one first time domain resource unit and the respective second frequency domain resource configuration parameter corresponding to each of the at least one first time domain resource unit, the first frequency domain resource parameter comprises the first indication information, and the second frequency domain resource parameter comprises the third indication information; or
the resource configuration information comprises the first frequency domain resource configuration parameter shared by the at least one first time domain resource unit and the respective second frequency domain resource configuration parameter corresponding to each of the at least one first time domain resource unit, the first frequency domain resource parameter comprises the third indication information, and the second frequency domain resource parameter comprises the first indication information.

**17.** The method of any one of claims 3 to 7, wherein the third indication information comprises second DL indication information for indicating a bandwidth of the DL frequency domain resource.

**18.** The method of claim 17, wherein the resource location of the first frequency domain resource is determined by the resource location of the UL frequency domain resource and the bandwidth of the DL frequency domain resource, in a case that:

the resource configuration information comprises the first frequency domain resource configuration parameter shared by the at least one first time domain resource unit, and the first frequency domain resource configuration parameter comprises the first indication information and the third indication information; or
the resource configuration information comprises the respective second frequency domain resource configuration parameter corresponding to each of the at least one first time domain resource unit, and the second frequency domain resource configuration parameter comprises the first indication information and the third indication information; or
the resource configuration information comprises the first frequency domain resource configuration parameter shared by the at least one first time domain resource unit and the respective second frequency domain resource configuration parameter corresponding to each of the at least one first time domain resource unit, the first frequency domain resource parameter comprises the first indication information, and the second frequency domain resource parameter comprises the third indication information; or
the resource configuration information comprises the first frequency domain resource configuration parameter shared by the at least one first time domain resource unit and the respective second frequency domain resource configuration parameter corresponding to each of the at least one first time domain resource unit, the first frequency domain resource parameter comprises the third indication information, and the second frequency domain resource parameter comprises the first indication information.

**19.** The method of claim 17 or 18, wherein the second DL indication information is used to indicate a total bandwidth of DL frequency domain resource(s) on a carrier; or
the second DL indication information is used to indicate a respective bandwidth of each of at least two DL frequency domain resources on the carrier.

**20.** The method of claim 19, wherein,

in a case that the carrier comprises two first frequency domain resources, and the two first frequency domain resources are symmetrically distributed around the UL frequency domain resource, a bandwidth of any one first frequency domain resource is a first bandwidth, wherein the first bandwidth is (carrier bandwidth - bandwidth of the UL frequency domain resource - total bandwidth of the DL frequency domain resource(s) on the carrier) / 2; and
in a case that the carrier comprises a single first frequency domain resource, a bandwidth of the first frequency domain resource is a second bandwidth, wherein the second bandwidth is (carrier bandwidth-bandwidth of the UL frequency domain resource - total bandwidth of the DL frequency domain resource(s) on the carrier).

**21.** The method of claim 2, wherein in a case that the resource configuration information comprises the first frequency domain resource configuration parameter, the first frequency domain resource configuration parameter comprises fourth indication information, or in a case that the resource configuration information comprises the second frequency domain resource configuration parameter, the second frequency domain resource configuration parameter comprises the fourth indication information,
wherein the fourth indication information is used to indicate, through a manner of bitmap, a respective transmission direction of each frequency domain resource unit in a carrier, and the transmission direction comprises UL, DL or other.

**22.** The method of claim 2, wherein in a case that the resource configuration information comprises the first frequency domain resource configuration parameter, the first frequency domain resource configuration parameter comprises fifth indication information, or in a case that the resource configuration information comprises the second frequency domain resource configuration parameter, the second frequency domain resource configuration parameter comprises the fifth indication information,

wherein the fifth indication information is used to indicate an index corresponding to a first combination, the first combination is a combination of respective transmission directions of frequency domain resource units in a carrier, and the transmission directions comprise UL, DL and other; or
the fifth indication information is used to indicate an index corresponding to a second combination, the second combination is a location combination of frequency domain resource units in specified transmission direction(s) in the carrier, and the specified transmission direction(s) comprise(s) at least one of UL, UL, or other.

**23.** The method of claim 21 or 22, wherein the transmission direction of the frequency domain resource unit being other indicates that the transmission direction of the frequency domain resource unit is to-be-determined, or indicates that the frequency domain resource unit is not available for resource scheduling information.

**24.** The method of any one of claims 6, 7, 14, 15, 21 to 23, wherein the frequency domain resource unit is a Resource Block (RB), a RB group, or a subband.

**25.** The method of any one of claims 2 to 24, wherein the resource configuration information further comprises a time domain indication parameter;
wherein the time domain indication parameter is used to indicate a time domain location of a time domain resource unit configured with an UL frequency domain resource and a non-UL frequency domain resource that have same time domain.

**26.** The method of claim 25, wherein the time domain indication parameter is used to indicate, through a manner of bitmap, whether each time domain resource unit in a configuration period is configured with an UL frequency domain resource and a non-UL frequency domain resource that have the same time domain; or
the time domain indication parameter is used to indicate, through a manner of bitmap, whether each DL time domain resource unit and/or flexible time domain resource unit in the configuration period is configured with the UL frequency domain resource and the non-UL frequency domain resource that have the same time domain.

**27.** The method of claim 26, wherein the time domain resource unit is a slot, a subslot or a symbol.

**28.** A wireless transmission method, wherein the method is performed by a network device, and the method comprises:

sending resource configuration information to a terminal device, wherein the resource configuration information is used for indicating resource location(s) of an uplink (UL) frequency domain resource and/or a non-UL frequency domain resource on at least one time domain resource unit,
wherein UL frequency domain resource and non-UL frequency domain resource that have same time domain are allowed to be configured on the time domain resource unit.

**29.** The method of claim 28, wherein,

the resource configuration information comprises a first frequency domain resource configuration parameter shared by at least one first time domain resource unit; and/or the resource configuration information comprises a respective second frequency domain resource configuration parameter corresponding to each of the at least one first time domain resource unit,
wherein the at least one first time domain resource unit is time domain resource unit(s), configured with an UL frequency domain resource and a non-UL frequency domain resource that have same time domain, among the at least one time domain resource unit, or the at least one first time domain resource unit is all of the at least one time domain resource unit.

**30.** The method of claim 29, wherein the first frequency domain resource configuration parameter and the second frequency domain resource configuration parameter comprise at least one piece of first indication information, second indication information, or third indication information, respectively; wherein,

the first indication information is used to indicate the resource location of the UL frequency domain resource;
the second indication information is used to indicate a resource location of a first frequency domain resource, wherein the first frequency domain resource is a resource not available for resource scheduling information, or a transmission direction of the first frequency domain resource is to-be-determined, and the first frequency domain resource is a frequency domain resource adjacent to the UL frequency domain resource; and
the third indication information is used to indicate a resource location of a downlink (DL) frequency domain resource.

**31.** The method of claim 30, wherein,

in a case that the resource configuration information comprises the first frequency domain resource configuration parameter, the first frequency domain resource configuration parameter comprises at least one of the first indication information, the second indication information, or the third indication information; or
in a case that the resource configuration information comprises the second frequency domain resource configuration parameter, the second frequency domain resource configuration parameter comprises at least one of the first indication information, the second indication information, or the third indication information; or
in a case that the resource configuration information comprises the first frequency domain resource configuration parameter and the second frequency domain resource configuration parameter, the first frequency domain resource configuration parameter comprises one or two of the first indication information, the second indication information, and the third indication information, and the second frequency domain resource configuration parameter comprises other part or all pieces of indication information, other than the indication information comprised in the first frequency domain resource, among the first indication information, the second indication information, and the third indication information.

**32.** The method of claim 30 or 31, wherein the first indication information is used to indicate a reference frequency domain location and a bandwidth of the UL frequency domain resource.

**33.** The method of claim 32, wherein the reference frequency domain location of the UL frequency domain resource is a location of a starting frequency domain resource unit of the UL frequency domain resource, or the reference frequency domain location of the UL frequency domain resource is a location of a middle frequency domain resource unit of the UL frequency domain resource; and
the bandwidth of the UL frequency domain resource is a number of frequency domain resource units of the UL frequency domain resource.

**34.** The method of claim 33, wherein in a case that the reference frequency domain location of the UL frequency domain resource is the location of the starting frequency domain resource unit of the UL frequency domain resource,
the first indication information is used to indicate, through a manner of Start and Length Indicator (SLIV), the location of the starting frequency domain resource unit of the UL frequency domain resource and the number of frequency domain resource units of the UL frequency domain resource.

**35.** The method of any one of claims 30 to 34, wherein the second indication information is used to indicate a bandwidth value of the first frequency domain resource.

**36.** The method of claim 35, wherein,

the second indication information is used to indicate a single guard bandwidth value, wherein the single guard bandwidth value is used to indicate a bandwidth of at least two first frequency domain resources that have same bandwidth; or
the second indication information is used to indicate a single guard bandwidth value, wherein the single guard bandwidth value is used to indicate a bandwidth of a single first frequency domain resource; or
the second indication information is used to indicate at least two guard bandwidth values, wherein the at least two guard bandwidth values are used to indicate bandwidths of at least two first frequency domain resources, respectively.

**37.** The method of any one of claims 32 to 36, wherein the resource location of the DL frequency domain resource is determined by the resource location of the UL frequency domain resource and the resource location of the first frequency domain resource, in a case that:

the resource configuration information comprises the first frequency domain resource configuration parameter, and the first frequency domain resource configuration parameter comprises the first indication information and the second indication information; or
the resource configuration information comprises the second frequency domain resource configuration parameter, and the second frequency domain resource configuration parameter comprises the first indication information and the second indication information; or
the resource configuration information comprises the first frequency domain resource configuration parameter and the second frequency domain resource configuration parameter, the first frequency domain resource parameter comprises the first indication information, and the second frequency domain resource parameter comprises the second indication information; or
the resource configuration information comprises the first frequency domain resource configuration parameter and the second frequency domain resource configuration parameter, the first frequency domain resource parameter comprises the second indication information, and the second frequency domain resource parameter comprises the first indication information.

**38.** The method of any one of claims 30 to 34, wherein the third indication information comprises first DL indication information for indicating a reference frequency domain location and a bandwidth of the DL frequency domain resource.

**39.** The method of claim 38, wherein the first DL indication information comprises a single DL frequency domain resource indication value, and the single DL frequency domain resource indication value is used to indicate a reference frequency domain location and a bandwidth of any one of two DL frequency domain resources,
wherein the two DL frequency domain resources are symmetrically distributed around the UL frequency domain resource.

**40.** The method of claim 38, wherein the first DL indication information comprises at least one DL frequency domain resource indication value, and the at least one DL frequency domain resource indication value is used to indicate a reference frequency domain location and a bandwidth of at least one DL frequency domain resource, respectively.

**41.** The method of any one of claims 38 to 40, wherein the reference frequency domain location of the DL frequency domain resource is a location of a starting frequency domain resource unit of the DL frequency domain resource, or the reference frequency domain location of the DL frequency domain resource is a location of a middle frequency domain resource unit of the DL frequency domain resource; and
the bandwidth of the DL frequency domain resource is a number of frequency domain resource units of the DL frequency domain resource.

**42.** The method of claim 41, wherein in a case that the reference frequency domain location of the DL frequency domain resource is the location of the starting frequency domain resource unit of the DL frequency domain resource,
the DL frequency domain resource indication value is used to indicate, through a manner of SLIV, the location of the starting frequency domain resource unit of the DL frequency domain resource and the number of frequency domain resource units of the DL frequency domain resource.

**43.** The method of any one of claims 38 to 42, wherein the resource location of the first frequency domain resource is determined by the resource location of the UL frequency domain resource and the resource location of the DL frequency domain resource, in a case that:

the resource configuration information comprises the first frequency domain resource configuration parameter shared by the at least one first time domain resource unit, and the first frequency domain resource configuration parameter comprises the first indication information and the third indication information; or
the resource configuration information comprises the respective second frequency domain resource configuration parameter corresponding to each of the at least one first time domain resource unit, and the second frequency domain resource configuration parameter comprises the first indication information and the third indication information; or
the resource configuration information comprises the first frequency domain resource configuration parameter shared by the at least one first time domain resource unit and the respective second frequency domain resource configuration parameter corresponding to each of the at least one first time domain resource unit, the first frequency domain resource parameter comprises the first indication information, and the second frequency domain resource parameter comprises the third indication information; or
the resource configuration information comprises the first frequency domain resource configuration parameter shared by the at least one first time domain resource unit and the respective second frequency domain resource configuration parameter corresponding to each of the at least one first time domain resource unit, the first frequency domain resource parameter comprises the third indication information, and the second frequency domain resource parameter comprises the first indication information.

**44.** The method of any one of claims 30 to 34, wherein the third indication information comprises second DL indication information for indicating a bandwidth of the DL frequency domain resource.

**45.** The method of claim 44, wherein the resource location of the first frequency domain resource is determined by the resource location of the UL frequency domain resource and the bandwidth of the DL frequency domain resource, in a case that:

the resource configuration information comprises the first frequency domain resource configuration parameter shared by the at least one first time domain resource unit, and the first frequency domain resource configuration parameter comprises the first indication information and the third indication information; or
the resource configuration information comprises the respective second frequency domain resource configuration parameter corresponding to each of the at least one first time domain resource unit, and the second frequency domain resource configuration parameter comprises the first indication information and the third indication information; or
the resource configuration information comprises the first frequency domain resource configuration parameter shared by the at least one first time domain resource unit and the respective second frequency domain resource configuration parameter corresponding to each of the at least one first time domain resource unit, the first frequency domain resource parameter comprises the first indication information, and the second frequency domain resource parameter comprises the third indication information; or
the resource configuration information comprises the first frequency domain resource configuration parameter shared by the at least one first time domain resource unit and the respective second frequency domain resource configuration parameter corresponding to each of the at least one first time domain resource unit, the first frequency domain resource parameter comprises the third indication information, and the second frequency domain resource parameter comprises the first indication information.

**46.** The method of claim 44 or 45, wherein the second DL indication information is used to indicate a total bandwidth of DL frequency domain resource(s) on a carrier; or
the second DL indication information is used to indicate a respective bandwidth of each of at least two DL frequency domain resources on the carrier.

**47.** The method of claim 46, wherein,

in a case that the carrier comprises two first frequency domain resources, and the two first frequency domain resources are symmetrically distributed around the UL frequency domain resource, a bandwidth of any one first frequency domain resource is a first bandwidth, wherein the first bandwidth is (carrier bandwidth - bandwidth of the UL frequency domain resource - total bandwidth of the DL frequency domain resource(s) on the carrier) / 2; and;
in a case that the carrier comprises a single first frequency domain resource, a bandwidth of the first frequency domain resource is a second bandwidth, wherein the second bandwidth is (carrier bandwidth-bandwidth of the UL frequency domain resource - total bandwidth of the DL frequency domain resource(s) on the carrier).

**48.** The method of claim 29, wherein in a case that the resource configuration information comprises the first frequency domain resource configuration parameter, the first frequency domain resource configuration parameter comprises fourth indication information, or in a case that the resource configuration information comprises the second frequency domain resource configuration parameter, the second frequency domain resource configuration parameter comprises the fourth indication information,
wherein the fourth indication information is used to indicate, through a manner of bitmap, a respective transmission direction of each frequency domain resource unit in a carrier, and the transmission direction comprises UL, DL or other.

**49.** The method of claim 29, wherein in a case that the resource configuration information comprises the first frequency domain resource configuration parameter, the first frequency domain resource configuration parameter comprises fifth indication information, or in a case that the resource configuration information comprises the second frequency domain resource configuration parameter, the second frequency domain resource configuration parameter comprises the fifth indication information,

wherein the fifth indication information is used to indicate an index corresponding to a first combination, the first combination is a combination of respective transmission directions of frequency domain resource units in a carrier, and the transmission directions comprise UL, DL and other; or
the fifth indication information is used to indicate an index corresponding to a second combination, the second combination is a location combination of frequency domain resource units in specified transmission direction(s) in the carrier, and the specified transmission direction(s) comprise(s) at least one of UL, UL, or other.

**50.** The method of claim 48 or 49, wherein the transmission direction of the frequency domain resource unit being other indicates that the transmission direction of the frequency domain resource unit is to-be-determined, or indicates that the frequency domain resource unit is not available for resource scheduling information.

**51.** The method of any one of claims 33, 34, 41, 42, 48 to 50, wherein the frequency domain resource unit is a Resource Block (RB), a RB group, or a subband.

**52.** The method of any one of claims 29 to 51, wherein the resource configuration information further comprises a time domain indication parameter;
wherein the time domain indication parameter is used to indicate a time domain location of a time domain resource unit configured with an UL frequency domain resource and a non-UL frequency domain resource that have same time domain.

**53.** The method of claim 52, wherein the time domain indication parameter is used to indicate, through a manner of bitmap, whether each time domain resource unit in a configuration period is configured with an UL frequency domain resource and a non-UL frequency domain resource that have the same time domain; or
the time domain indication parameter is used to indicate, through a manner of bitmap, whether each DL time domain resource unit and/or flexible time domain resource unit in the configuration period is configured with the UL frequency domain resource and the non-UL frequency domain resource that have the same time domain.

**54.** The method of claim 53, wherein the time domain resource unit is a slot, a subslot or a symbol.

**55.** A wireless transmission apparatus, comprising:

a receiving module, configured to receive resource configuration information used for indicating resource location(s) of an uplink (UL) frequency domain resource and/or a non-UL frequency domain resource on at least one time domain resource unit;

wherein UL frequency domain resource and non-UL frequency domain resource that have same time domain are allowed to be configured on the time domain resource unit.

**56.** A wireless transmission apparatus, comprising:

a sending module, configured to send resource configuration information to a terminal device, wherein the resource configuration information is used for indicating resource location(s) of an uplink (UL) frequency domain resource and/or a non-UL frequency domain resource on at least one time domain resource unit,
wherein UL frequency domain resource and non-UL frequency domain resource that have same time domain are allowed to be configured on the time domain resource unit.

**57.** A terminal device, comprising a processor, a memory and a transceiver,
wherein the memory is configured to store a computer program, and the processor is configured to perform the computer program to cause the terminal device to implement the wireless transmission method of any one of claims 1 to 27.

**58.** A network device, wherein the terminal device comprises a processor, a memory and a transceiver;
wherein the memory is configured to store a computer program, and the processor is configured to perform the computer program to cause the network device to implement the wireless transmission method of any one of claims 28 to 54.

**59.** A computer readable storage medium having stored therein a computer program for execution by a processor of a communication device to cause the communication device to implement the wireless transmission method of any one of claims 1 to 54.

**60.** A chip for operation in a communication device to cause the communication device to perform the wireless transmission method of any one of claims 1 to 54.

**61.** A computer program product comprising computer instructions stored in a computer readable storage medium, wherein a processor of a communication device reads the computer instructions from the computer-readable storage medium and performs the computer instructions to cause the communication device to perform the wireless transmission method of any one of claims 1 to 54.

**62.** A computer program executed by a processor of a communication device to cause the communication device to implement the wireless transmission method of any one of claims 1 to 54.

110
UL
DL
120
130
First SL
Second SL

FIG. 1

22
DL
21
UL
23
DL
Slot

FIG. 2

Receive resource configuration information. The resource configuration information is used for indicating resource location(s) of an UL frequency domain resource and/or a non-UL frequency domain resource on at least one time domain resource unit. The UL frequency domain resource and the non-UL frequency domain resource that have same time domain are allowed to be configured on the time domain resource unit

301

Determine time-frequency resource(s) for UL transmission and/or non-UL transmission according to the resource configuration information

302

**FIG. 3**

46
42
DL
44
G
47
UL
45
G
43
41
DL
Slot

**FIG. 4**

Send resource configuration information to a terminal device. The resource configuration information is used for indicating resource location(s) of an UL frequency domain resource and/or a non-UL frequency domain resource on at least one time domain resource unit. The UL frequency domain resource and the non-UL frequency domain resource that have same time domain are allowed to be configured on the time domain resource unit

501

Determine a time-frequency resource for UL-DL transmission with the terminal device according to the resource configuration information

502

**FIG. 5**

Configuration process
61
62
Resource configuration information
63
DL
G
UL
G
DL
Scheduling process
61
62
Scheduling information
64
DL
G
65
UL
G
DL

**FIG. 6**

Terminal device
Network device
S701，Send resource configuration information
S702，Determine the configured transmission directions of respective frequency domain resources on at least one time domain resource unit according to the resource configuration information
S703，Perform data transmission according to the transmission direction configuration of the frequency domain resources on the at least one time domain resource unit

FIG. 7

D D D D D F F U U U
5
10
19
24
G
UL
G
RB number
Slot

FIG. 8

D D D D D F F U U U
50
60
G
UL
RB number
Slot

FIG. 9

D D D D D F F U U U
40
50
60
G
G
UL
UL
RB number
Slot

FIG. 10

1101
Receiving module
1102
Processing module

FIG. 11

1201
Sending module
1202
Processing module

FIG. 12

Communication device 1300
1301
Processor
1303
Transmitter
1305
Bus
1302
Receiver
1304
Memory

FIG. 13

## INTERNATIONAL SEARCH REPORT

International application No.
**PCT/CN2023/076585**

**A. CLASSIFICATION OF SUBJECT MATTER**

H04W 72/0446(2023.01)i

According to International Patent Classification (IPC) or to both national classification and IPC

**B. FIELDS SEARCHED**

Minimum documentation searched (classification system followed by classification symbols)

IPC： H04W

Documentation searched other than minimum documentation to the extent that such documents are included in the fields searched

Electronic data base consulted during the international search (name of data base and, where practicable, search terms used)

CNABS; CNTXT; CNKI; VEN; WOTXT; USTXT; EPTXT; 3GPP: 子带全双工, 子帧, 时隙, 符号, 时域, 子带, 频域, 资源块, 位置, 方向, 上行, 下行, 保护, 配置, 指示, SBFD, slot, time domain, sub-band, RB, frequency domain, position, uplink, downlink, guard, configure, indicate

**C. DOCUMENTS CONSIDERED TO BE RELEVANT**

| Category* | Citation of document, with indication, where appropriate, of the relevant passages | Relevant to claim No. |
|---|---|---|
| X | ERICSSON. "Sub-band Non-overlapping Full Duplex" *3GPP TSG-RAN WG1 Meeting #109-e Tdoc, R1-2204107,* 09 April 2022 (2022-04-09), text, sections 2 and 3, and figure 4 | 1-62 |
| A | CN 110431896 A (GUANGDONG OPPO MOBILE COMMUNICATIONS CO., LTD.) 08 November 2019 (2019-11-08) entire document | 1-62 |
| A | CN 111867074 A (HUAWEI TECHNOLOGIES CO., LTD.) 30 October 2020 (2020-10-30) entire document | 1-62 |
| A | CN 114982356 A (GUANGDONG OPPO MOBILE COMMUNICATIONS CO., LTD.) 30 August 2022 (2022-08-30) entire document | 1-62 |
| A | CN 115398831 A (QUALCOMM INC.) 25 November 2022 (2022-11-25) entire document | 1-62 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **23 October 2023** | **03 November 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2023/076585**

| Patent document cited in search report | | | Publication date (day/month/year) | Patent family member(s) | Publication date (day/month/year) |
|---|---|---|---|---|---|
| CN | 110431896 | A | 08 November 2019 | None | |
| CN | 111867074 | A | 30 October 2020 | None | |
| CN | 114982356 | A | 30 August 2022 | None | |
| CN | 115398831 | A | 25 November 2022 | None | |

Form PCT/ISA/210 (patent family annex) (July 2022)